# EUROPÄISCHE PATENTSCHRIFT

(11) **EP 2 670 087 B1**
(45) Veröffentlichungstag und Bekanntmachung des Hinweises auf die Patenterteilung: **30.03.2016**
(21) Anmeldenummer: 13162449.6
(22) Anmeldetag: 05.04.2013
(51) Int. Cl.: H04L 12/437, B60R 16/023

(54) **Netzwerkeinrichtung, Netzwerkanordnung und Verfahren zum Betreiben einer Netzwerkanordnung**
Network device, network assembly and method for operating a network assembly
Dispositif de réseau, agencement de réseau et procédé de fonctionnement d'un agencement de réseau

(30) Priorität: 30.05.2012 DE 102012209108
(43) Veröffentlichungstag der Anmeldung: 04.12.2013
(73) Patentinhaber: Siemens Aktiengesellschaft, 80333 München (DE)
(72) Erfinder: Zirkler, Andreas, Dr., 81671 München (DE); Fiege, Ludger, Dr., 85567 Grafing (DE); Schmid, Thomas, 72622 Nürtingen (DE); Armbruster, Michael, Dr., 81825 München (DE); Riedl, Johannes, Dr., 84030 Ergolding (DE)

(56) Entgegenhaltungen:
- WO-A1-2013/041351
- US-A- 6 085 241
- US-B1- 8 004 961

## Beschreibung

Die vorliegende Erfindung betrifft eine Netzwerkeinrichtung, eine Netzwerkanordnung und ein Verfahren zum Betreiben einer Netzwerkanordnung. Die Netzwerkeinrichtung und Netzwerkanordnung eignen sich insbesondere in einer geswitchten Netzwerkumgebung, wie beispielsweise einer Ethernet-Umgebung. Die Erfindung dient dem Aufbau eines sicheren Datennetzwerks.

Kommunikationsnetzwerke finden immer breitere Anwendung zum Messen, Steuern und Regeln komplexer technischer Systeme. Beispielsweise werden zunehmend Netzwerke in Kraftfahrzeugen eingesetzt, um Fahrzeugsteuerungssysteme auszubilden. In entsprechenden komplexen und sicherheitsrelevanten technischen Systemen werden hohe Anforderungen an die Verfügbarkeit der als Netzwerkeinrichtungen vorgesehenen Steuerungselemente gestellt. Beim Ausfall von einzelnen Komponenten, wie beispielsweise Sensoren oder Steuereinrichtungen, darf dies nicht zum Ausfall des Gesamtsystems führen. Besonders sicherheitsrelevant sind Drive-by-Wire-Systeme, z.B. Steer-by-Wire-Systeme, bei denen elektromotorisch über eine Netzwerkkopplung von Sensor-, Steuer- und Aktoreinrichtungen die Lenkradstellung in Radpositionen umgesetzt wird.

In der Vergangenheit wurden redundante Ausführungen besonders kritischer Komponenten eingesetzt, so dass im Fehlerfall die jeweilige Backup oder redundante Komponente, die jeweilige Aufgabe übernehmen kann. Bei mehreren redundanten Komponenten muss sichergestellt sein, dass nur eine der beiden oder mehreren Steuereinrichtungen, die jeweilige Steuerhoheit innehat. Außerdem dürfen nicht widersprüchliche Steuerungsbefehle für gleiche Steuerfunktionalitäten entstehen. Deshalb ist es notwendig, dass alle Steuerungskomponenten über dieselben Informationen oder Daten in dem Netzwerk verfügen.

Insofern müssen Fehler in Form von inkonsistenten Daten, die beispielsweise bei einer Datenübertragung über das verwendete Netzwerk korrumpiert sein können, erkannt werden. Eine Standard-Netzwerkumgebung, die weit verbreitet ist, basiert auf dem Ethernet-Protokoll. Die Verwendung von Ethernet-Infrastrukturen hat den Vorteil, dass standardisierte Netzwerkeinrichtungen und Verfahren zum Einsatz kommen können. In der Vergangenheit wurden jedoch auch proprietäre Datenbusse verwendet, um Steuerungskomponenten mit innerer Redundanz, also doppelt ausgelegter Funktionalität, miteinander zu verknüpfen.

Darüber hinaus ist es möglich, dass in dem Netzwerk eingesetzte Knoten fehlerhaft sind. Bekannt sind zum Beispiel Fehlertypen, bei denen eine Netzwerkeinrichtung mit hoher Frequenz Daten in das Netzwerk sendet, die keine für die anderen Steuereinrichtungen brauchbaren Daten enthalten. Man spricht auch von einem "Babbling Idiot". Die Netzwerkinfrastruktur kann dann derart durch hohe Datenraten belastet werden, dass echte Steuer- oder Sensordaten nicht mehr zwischen den noch funktionierenden Netzwerkeinrichtungen ausgetauscht werden können. Es ist wünschenswert, insbesondere solche Fehlverhalten in sicherheitsrelevanten Netzwerken zu behandeln und die vorliegenden Daten geeignet zu verarbeiten, um einen zuverlässigen Betrieb der nicht betroffenen Einrichtungen im Netzwerk zu gewährleisten.

In der Vergangenheit wurden Verfahren vorgeschlagen, bei denen der Datenaustausch zwischen vorgegebenen Kommunikationspartnern bandbreitenbegrenzt wurde. Defekte Netzwerk-Knoten können allerdings auch Datenpakete mit unzutreffenden Adressdaten erzeugen, was im Rahmen von einer dezidierten Bandbreitenbegrenzung nicht in jeder Netzwerktopologie, insbesondere nicht in einer ringförmigen Netzwerktopologie, zufriedenstellend behandelt werden kann.

Außerdem sind Verfahren bekannt, die auf eine synchronisierte Kommunikation der Netzwerk-Knoten untereinander basieren. Dabei werden bestimmte Zeitschlitze für den Datenaustausch zwischen vorgegebenen Kommunikationspartnern definiert. Solche Zeitschlitzverfahren erfordern eine aufwendige Synchronisation und spezielle Hardware-Einrichtungen.

Die US 6 085 241 A offenbart einen Bandbreitenmanager für Netzwerksegmente. Der Bandbreitenmanager weist Medienzugriffssteuereinheiten und Sendeempfänger auf. Ein Datenwähler, der zwischen den Medienzugriffssteuereinheiten und den Sendeempfängern angeordnet ist, ermöglicht, dass die Sendeempfänger an ihren medienunabhängigen Datenschnittstellen kreuzverbunden sind, während die Medienzugriffssteuereinheiten lediglich verwendet werden, um die Symbole, die ausgetauscht werden, zu überwachen.

Die US 8 004 961 B1 offenbart eine Multi-Port-Ethernet-Vorrichtung mit gemultiplexten Datenpfaden und einer Steuerlogik.

Es ist somit wünschenswert Netzwerkeinrichtungen bereitzustellen die einzeln oder im Einsatz mit mehreren in einer Netzwerkanordnung oder einem Kommunikationsnetzwerk möglicht robust in Fehlersituationen arbeiten.

Es ist daher eine Aufgabe der vorliegenden Erfindung, eine verbesserte Netzwerkeinrichtung, eine Netzwerkanordnung und/oder ein Verfahren zum Betreiben von Netzwerkanordnungen oder Kommunikationsnetzwerken bereitzustellen.

Demgemäß wird eine Netzwerkeinrichtung für ein Kommunikationsnetzwerk mit einer ersten Steuereinrichtung, einer zweiten Steuereinrichtung, einem ersten physikalischen Port, welcher der ersten Steuereinrichtung zugeordnet ist, und einem zweiten physikalischen Port, welcher der zweiten Steuereinrichtung zugeordnet ist, vorgeschlagen. Dabei sind der erste und der zweite physikalische Port eingerichtet, Daten von einem Übertragungsmedium zu empfangen und Daten zu senden. Die Netzwerkeinrichtung ist derart eingerichtet, dass Sendedaten von der ersten Steuereinrichtung von einem internen Sendeanschluss der ersten Steuereinrichtung über den ersten physikalischen Port in das Übertragungsmedium gekoppelt werden und an dem zweiten physikalischen Port eintreffende Empfangsdaten an einen internen Empfangsanschluss der ersten Steuereinrichtung geleitet werden.

Eine alternative Ausführungsform einer Netzwerkeinrichtung für ein Kommunikationsnetzwerk umfasst eine erste Steuereinrichtung, eine zweite Steuereinrichtung, einen ersten physikalischen Port, welcher der ersten Steuereinrichtung zugeordnet ist, und einen zweiten physikalischen Port, welcher der zweiten Steuereinrichtung zugeordnet ist, wobei der erste und der zweite physikalische Port eingerichtet sind, Daten von einem Übertragungsmedium zu empfangen und Daten zu senden. Die Netzwerkeinrichtung ist derart eingerichtet, dass an dem ersten physikalischen Port eintreffende Empfangsdaten an einen internen Empfangsanschluss der ersten Steuereinrichtung geleitet werden und Sendedaten von der ersten Steuereinrichtung von einem internen Sendeanschluss der ersten Steuereinrichtung über den zweiten physikalischen Port in das Übertragungsmedium gekoppelt werden.

Erfindungsgemäß umfasst die Netzwerkeinrichtung eine erste und eine zweite Switch-Einrichtung, wobei eine jeweilige Switch-Einrichtung mehrere Switch-Ports aufweist. Ein jeweiliger Switch-Port umfasst einen internen Sendeanschluss und einen internen Empfangsanschluss. Die erste Switch-Einrichtung ist mit Hilfe eines Switch-Ports kommunikativ an die erste Steuereinrichtung gekoppelt, und die zweite Switch-Einrichtung ist mit Hilfe eines Switch-Ports kommunikativ an die zweite Steuereinrichtung gekoppelt.

Die Zuleitung oder das Routing oder Switching der Empfangs- und/oder Sendedaten kann zwischen der jeweiligen Steuereinrichtung und den zugeordneten physikalischen Ports beispielsweise mit Hilfe von zugeordneten Switch-Einrichtungen erfolgen. Switch-Einrichtungen können ferner den Datenverkehr zwischen Steuereinrichtungen schaffen. Ein Teil der Netzwerkeinrichtung kann als eine Kombination von Steuereinrichtung, Switch-Einrichtung und physikalischen Port in der Art eines Moduls oder auch eines einzelnen integrierten Schaltkreises bzw. Chips vorliegen.

Die Netzwerkeinrichtungen können beispielsweise Sensoreinrichtungen oder Aktoreinrichtungen sein. Als Sensoreinrichtungen sind Drehzahlsensoren, Brems- oder Schaltsteuerungseinrichtungen denkbar. Es können auch Steuergeräte als Netzwerkeinrichtungen eingesetzt sein, die beispielsweise ein Drive-by-Wire ermöglichen. Dabei werden beispielsweise Lenk- oder Beschleunigungsimpulse elektronisch über das Netzwerk an entsprechende Aktoren übergeben, so dass die gewünschte Reaktion des Fahrzeugs einsetzt. Die erste und zweite Steuereinrichtung ist in der Regel dazu geeignet, Daten zu erzeugen, welche von Sensoren oder Steueralgorithmen verwendet oder erzeugt werden.

Die Netzwerkeinrichtungen sind vorzugsweise jeweils als einzelner FPGA, ASIC, IC Chip, oder fest verdrahteter Mikroschaltkreis ausgeführt. Denkbar ist auch die Ausführung jeweils eines Chips, der die Steuereinrichtung und einen Switch mit dem physikalischen Port implementiert. Es können auch Module gefertigt werden, die CPU, Switch und Port mit Steckverbindung umfassen.

Als in den Netzwerkeinrichtungen vorgesehene Steuereinrichtungen kommen beispielsweise eine CPU, ein Mikroprozessor oder auch andere programmierbare Schaltkreise in Frage. Als Steuereinrichtung kann ferner eine Sensor- oder Aktoreinrichtung verstanden werden.

Die Netzwerkeinrichtung ermöglicht insbesondere den Einsatz in einem geswitchten Netzwerk. Das Kommunikationsnetzwerk oder Übertragungsmedium kann insbesondere eine Ethernet-Umgebung umfassen.

Ein physikalischer Port oder PHY-Port ist vorzugsweise der physikalischen Schicht des OSI-Schichtenmodells zugeordnet. Als physikalischer Port gilt beispielsweise ein Verbindungselement zwischen der OSI-MAC-Schicht und einem physikalischen Medium, wie einer optischen Faser oder einem Kupferkabel bzw. Netzwerkkabel zur Datenübertragung. In einer Ethernet-Umgebung ist ein physikalischer Port beispielsweise in einem PHY-Ceiver integriert. Der physikalische Port ermöglicht dabei die Kopplung der physikalischen Netzwerk-Infrastruktur mit Hilfe eines Kabels oder anderen Übertragungsmedium zur Sicherungsschicht und insbesondere der Media-Access-Control-Schicht (MAC). Als physikalischer Port wird dabei insbesondere ein Verbindungselement zwischen der physikalischen Schicht (OSI-Layer 1) und der Data-Link-Schicht (OSI-Layer 2) verstanden.

Die vorgeschlagene Netzwerkeinrichtung ermöglicht eine überkreuzte Datenübertragung. Beispielsweise werden von der ersten Steuereinrichtung gesendete oder erzeugte Daten über den zweiten Port oder dessen externen Sendeanschluss in das Übertragungsmedium gekoppelt. Gleichzeitig werden Sendedaten oder erzeugte Daten von der zweiten Steuereinrichtung über den ersten physikalischen Port an das Übertragungsmedium gekoppelt. Durch diese Über-Kreuz-Verknüpfung, die beispielsweise netzwerkeinrichtungsintern über eine Verschaltung oder Verdrahtung erfolgen kann, wird die Ausbildung einer ringförmigen Netzwerkanordnung mit mehreren Netzwerkeinrichtungen ermöglicht. Dabei ergeben sich praktisch unabhängig voneinander mit konsistenten Daten bestückte Kommunikationspfade in einem einzigen ringförmigen physikalischen Netzwerk. Insgesamt ergibt sich eine besonders robuste Netzwerkanordnung, bei der auch fehlerhafte Steuereinrichtungen in einem Netzwerk handhabbar sind und dennoch konsistente Daten im Netzwerk vorliegen können.

Ausführungsformen der Netzwerkeinrichtung sehen vor, dass die Netzwerkeinrichtung derart eingerichtet ist, dass Sendedaten von der zweiten Steuereinrichtung von einem internen Sendeanschluss der zweiten Steuereinrichtung über den zweiten physikalischen Port in das Überragungsmedium gekoppelt werden und an dem ersten physikalischen Port eintreffende Empfangsdaten an einen internen Empfangsanschluss der zweiten Steuereinrichtung geleitet werden. Alternativ ist die Netzwerkeinrichtung derart eingerichtet, dass an dem zweiten physikalischen Port eintreffende Empfangsdaten an einen internen Empfangsanschluss der zweiten Steuereinrichtung geleitet werden und Sendedaten von der zweiten Steuereinrichtung von einem internen Sendeanschluss der zweiten Steuereinrichtung über den ersten physikalischen Port in das Übertragungsmedium gekoppelt werden.

Es ist somit je nach Ausführungsform der Netzwerkanordnung möglich, die Sendepfade innerhalb der Netzwerkeinrichtung zu überkreuzen oder auch die Empfangspfade zu überkreuzen. Einerseits ist denkbar, die von der ersten Steuereinrichtung erzeugten Sendedaten über den zweiten physikalischen Port in das Übertragungsmedium zu koppeln und gleichzeitig die Sendedaten der zweiten Steuereinrichtung über den ersten physikalischen Port abzusetzen. Dabei werden allerdings die Empfangsdaten an dem ersten physikalischen Port der ersten Steuereinrichtung zugeführt und die Empfangsdaten am zweiten physikalischen Port für die zweite Steuereinrichtung.

In der alternativen Lösung werden die Empfangsdaten über Kreuz innerhalb der Netzwerkeinrichtung geführt. D.h., die an dem ersten physikalischen Port eintreffenden Empfangsdaten werden intern der zweiten Steuereinrichtung zugeführt und die an dem zweiten physikalischen Port vorliegenden Empfangsdaten der ersten Steuereinrichtung. Gleichzeitig werden jedoch die Sendedaten der ersten Steuereinrichtung über den ersten physikalischen Port abgesetzt und die Sendedaten von der zweiten Steuereinrichtung über den zweiten physikalischen Port.

Damit ergibt sich die Möglichkeit, insbesondere in einer ringförmigen Anordnung der Netzwerkeinrichtungen zwei voneinander unabhängige Kommunikationspfade mit unterschiedlicher Kommunikationsrichtung zu implementieren.

In Ausführungsformen der Netzwerkeinrichtung ist die Netzwerkeinrichtung derart eingerichtet, dass an dem ersten physikalischen Port eintreffende Empfangsdaten nicht an den internen Empfangsanschluss der ersten Steuereinrichtung gelangen. Ferner kann die Netzwerkeinrichtung derart eingerichtet sein, dass an dem zweiten physikalischen Port eintreffende Empfangsdaten nicht an den internen Empfangsanschluss der zweiten Steuereinrichtung gelangen.

Bei einer alternativen überkreuzten Führung von zu sendenden Daten ist die Netzwerkeinrichtung vorzugsweise derart eingerichtet, dass von dem internen Sendeanschluss der ersten Steuereinrichtung gesendete Daten nicht an den ersten physikalischen Port gelangen. Ferner ist denkbar, dass eine Leitung von von dem internen Sendeanschluss der zweiten Steuereinrichtung gesendete Daten nicht an den zweiten physikalischen Port gelangen.

In Ausführungsformen der Netzwerkeinrichtung umfasst ein jeweiliger physikalischer Port einen externen Sendeanschluss und einen externen Empfangsanschluss. Bei Vorliegen von Switch-Einrichtungen ist der externe Empfangsanschluss des ersten physikalischen Ports an einen Empfangsanschluss eines Switch-Ports der zweiten Switch-Einrichtung gekoppelt. Insofern erfolgt eine Über-Kreuz-Kommunikation mit Hilfe der Switch-Einrichtungen. Dabei wird bei dem der ersten Steuereinrichtung zugeordneten physikalischen Port bezüglich von Empfangsdaten oder Sendedaten eine Verknüpfung zur anderen Switch-Einrichtung beispielsweise durch eine direkte Leiterbahn oder Verbindung geschaffen.

In Ausführungsformen der Netzwerkeinrichtung, bei denen ein jeweiliger physikalischer Port einen externen Sendeanschluss und einen externen Empfangsanschluss umfasst, ist der externe Sendeanschluss des ersten physikalischen Ports an einen internen Sendeanschluss eines Switch-Ports der zweiten Switch-Einrichtung gekoppelt. Es ist ferner denkbar, dass der externe Sendeanschluss des zweiten physikalischen Ports an einen internen Sendeanschluss eines Switch-Ports der ersten Switch-Einrichtung gekoppelt ist.

In konventionellen Konfigurationen ist ein interner Switch-Port einer ersten Switch-Einrichtung an einen externen Sendeanschluss des ersten physikalischen Ports gekoppelt. Die vorbeschriebene Verknüpfung oder Verkabelung beispielsweise in Form von Leiterbahnen auf einem Träger ermöglicht die Über-Kreuz-Verschaltung und damit eine überkreuzte Datenübertragung.

In weiteren Ausführungsformen ist mindestens ein interner Sendeanschluss eines Switch-Ports einer Switch-Einrichtung an einen Empfangsanschluss eines Switch-Ports derselben Switch-Einrichtung gekoppelt.

Es ist beispielsweise möglich, dass eine eingesetzte Switch-Einrichtung derart programmiert oder eingerichtet ist, dass nur bei gleichzeitiger Beschaltung oder Versorgung von Switch-Ports mit Daten dieselben zuverlässig funktionieren. Bei einer internen Verbindung eines Sendeanschlusses an einen Empfangsanschluss wird beispielsweise unabhängig von den übertragenen Daten einer Standard-Switch-Einrichtung suggeriert, dass alle Anschlüsse der Switch-Ports belegt sind.

Es ist ferner möglich, dass in Ausführungsformen der Netzwerkeinrichtung mindestens eine Switch-Einrichtung derart eingerichtet ist, dass an einem Empfangsanschluss des Switch-Ports empfangene Daten an den internen Sendeanschluss desselben Switch-Ports versendet werden. Durch eine geeignete Programmierung einer Routing-Tabelle innerhalb der Switch-Einrichtung ist beispielsweise eine derartige Konfiguration realisierbar. Üblicherweise sind Switch-Einrichtungen anders programmiert und blockieren die Ausgabe von Daten an einem Sendeanschluss des Switch-Ports, der auch die Daten empfangen hat. Bei den vorliegenden Ausführungsformen hingegen ist eine derartige Konfiguration beispielsweise wünschenswert.

In weiteren Ausführungsformen der Netzwerkeinrichtung sind die erste Switch-Einrichtung und die zweite Switch-Einrichtung mit Hilfe von jeweils einem Switch-Port kommunikativ miteinander gekoppelt. Eine Kopplung der Switch-Einrichtungen untereinander ermöglicht beispielsweise einen weiteren Datenaustausch zwischen den beiden Steuereinrichtungen untereinander, ohne das Kommunikationsmedium, an das die physikalischen Ports gekoppelt sind, nutzen zu müssen. Insbesondere ist durch ein geeignetes Routing innerhalb der Switch-Einrichtungen ein Datenabgleich von Daten, die von der ersten Steuereinrichtung erzeugt werden, mit Daten, die von der zweiten Steuereinrichtung erzeugt werden, möglich. Insofern kann eine Konsistenzprüfung stattfinden.

Eine Datenübertragung zwischen den beiden Switch-Einrichtungen ist vorzugsweise bandbreitenbegrenzt. Dadurch kann in allen Einfach-Fehlersituationen von Teilen von Netzwerkeinrichtungen dennoch zuverlässig eine redundante Datenbereitstellung über mindestens eine von zwei physikalisch unabhängigen Richtungen innerhalb eines einzigen ringförmigen Netzwerkes erfolgen.

Weitere Ausführungsformen der Netzwerkeinrichtung sehen vor, dass mindestens eine Switch-Einrichtung derart eingerichtet ist, von an einem internen Empfangsanschluss des Switch-Ports von der kommunikativ an dem Switch-Port gekoppelten Steuereinrichtung empfangene Daten an einen internen Sendeanschluss des Switch-Ports der mindestens einen Switch-Einrichtung zu leiten, welcher mit einem internen Empfangsanschluss eines Switch-Ports der anderen Switch-Einrichtung verbunden ist.

Alternativ können an einem internen Empfangsanschluss des Switch-Ports von der kommunikativ an dem Switch-Port gekoppelten Steuereinrichtung empfangene Daten an einen internen Sendeanschluss eines Switch-Ports der mindestens eine Switch-Einrichtung geleitet werden, welche mit einem internen Empfangsanschluss der anderen Steuereinrichtung verbunden ist.

Es ist beispielsweise denkbar, um alle Sende- und Empfangsanschlüsse der Switch-Einrichtungen mit einem Datenverkehr zu belegen, die aufgrund der überkreuzten Datenübertragung zwischen der ersten Steuereinrichtung und dem zweiten physikalischen Port bzw. der zweiten Steuereinrichtung und dem ersten physikalischen Port möglicherweise ungenutzten Sende- oder Empfangsanschlüsse mit Dummy- oder Fülldaten zu belegen.

Es ist denkbar, dass der interne Empfangsanschluss und der interne Sendeanschluss der mindestens einen Switch-Einrichtung zu demselben Switch-Port der mindestens einen Switch-Einrichtung gehört. Insofern ist es auch möglich, dass eine Switch-Einrichtung derart verkabelt oder verdrahtet ist, dass Sende- oder Empfangsdaten an sich selbst gesendet werden, um die Anschlüsse der Switch-Ports vollständig auszuschöpfen.

In Ausführungsformen der Netzwerkeinrichtung haben die erste und die zweite Netzwerkeinrichtung jeweils einen weiteren internen Sendeanschluss und einen internen Empfangsanschluss. Die Steuereinrichtungen sind dabei kommunikativ direkt miteinander verbunden. Beispielsweise kann der interne Sendeanschluss der ersten Steuereinrichtung an einen internen Empfangsanschluss der zweiten Steuereinrichtung direkt gekoppelt oder verbunden sein. Insofern ist ein Datenabgleich direkt zwischen den Steuereinrichtungen denkbar.

Es ist ferner möglich, dass die Netzwerkeinrichtung derart ausgestaltet ist, dass die erste Steuereinrichtung erste Daten erzeugt und die zweite Steuereinrichtung zweite Daten erzeugt. Die ersten Daten und die zweiten Daten sind dabei vorzugsweise durch eine vorgegebene Codierung miteinander verknüpft. Insofern lässt sich durch Vergleich der ersten und zweiten Daten überprüfen, ob die Dateninhalte miteinander kompatibel oder gleich sind.

Beispielsweise erfolgt bei Steuereinrichtungen, die in Fahrzeugsteuerungen eingesetzt werden, eine redundante Erzeugung von Steuerdaten oder Sensordaten durch die Steuereinrichtungen. Diese werden redundant in eine entsprechende Netzwerkanordnung, die mindestens zwei voneinander unabhängige Kommunikationspfade umfasst, gesendet. Fällt eine Steuereinrichtung aus oder ist sie fehlerhaft oder erzeugt beispielsweise als Babbling Idiot übermäßig viele unsinnige Daten, kann dies durch Vergleich der Daten erkannt werden. Ferner ist auch bei einer fehlerhaften Steuereinrichtung oder Switch-Einrichtung durch die Über-Kreuz-Kommunikation eine physikalische Trennung der Kommunikationspfade möglich, so dass dennoch eine gesicherte Datenkommunikation innerhalb des Netzwerks erfolgen kann.

Die Steuereinrichtung und die zugehörige Switch-Einrichtung sowie der physikalische Port bilden vorzugsweise eine einzelne integrierte Schaltung oder ein Modul mit potenziell weiteren Bauelementen, wie Speicherbausteinen, aus. Insofern lässt sich die Netzwerkeinrichtung durch beispielsweise zwei standardmäßig herstellbare integrierte Schaltungen oder Chips bzw. Module aufbauen. Die Netzwerkeinrichtung bildet dann ein Modul aus zwei derartigen Chips bzw. Modulen aus, die geeignet miteinander physikalisch beispielsweise durch Leiterbahnen verknüpft sind.

In Ausführungsformen der Netzwerkeinrichtung sind der oder die physikalischen Ports mit einem Sende- und/oder einem Empfangsanschluss zum Ankoppeln von jeweils mindestens einem Twisted-Pair-Kabel ausgestaltet. Twisted-Pair-Kabel finden beispielsweise standardisiert Einsatz in Ethernet-Anwendungen und Netzwerken, so dass ein einfacher Einsatz und eine einfache Implementierung der Netzwerkeinrichtung und Verkabelung als Netzwerkanordnung möglich ist. Denkbar ist jedoch auch eine Ausgestaltung der Netzwerkeinrichtung, wobei der physikalische Port zum Ankoppeln von mindestens einem Lichtwellenleiter eingerichtet ist. Ferner sind weitere physikalische Port-Ausprägungen denkbar, beispielsweise zum Ankoppeln von drahtlosen Netzwerken.

Vorzugsweise ist die Netzwerkeinrichtung insbesondere zum Einsatz in einer Ethernet-Protokoll-Umgebung beispielsweise nach einem IEEE 802.3 Standard eingerichtet. Die Netzwerkeinrichtung ist vorzugsweise zum Einsatz in einem geswitchten Netzwerk ausgestaltet.

Es wird ferner eine Netzwerkanordnung mit einer oder mehreren Netzwerkeinrichtungen, wie sie zuvor beschrieben sind, vorgeschlagen. Eine jeweilige Netzwerkeinrichtung umfasst jeweils eine erste Steuereinrichtung und einen der ersten Steuereinrichtung zugeordneten ersten physikalischen Port sowie eine zweite Steuereinrichtung und einen der zweiten Steuereinrichtung zugeordneten zweiten physikalischen Port. Zum Ausbilden einer Ringstruktur ist jeder einer ersten Steuereinrichtung in einer ersten Netzwerkeinrichtung zugeordnete physikalische Port mit Hilfe eines Übertragungsmediums kommunikativ an einen einer zweiten Steuereinrichtung in einer zweiten Netzwerkeinrichtung zugeordneten physikalischen Port gekoppelt.

Es ergibt sich damit eine Ringstruktur zwischen physikalischen Ports, die beispielsweise über Netzwerkkabel miteinander verknüpft sind. Man erhält eine Ringstruktur, die Kommunikationspfade, welche in unterschiedliche Richtungen ringförmig jede der Netzwerkeinrichtungen erreichen. Dabei ergibt sich eine erste Senderichtung durch die physikalischen Ports und zu den Steuereinrichtungen und eine zweite entgegengesetzte Senderichtung ebenfalls über die physikalischen Ports. Durch die über Kreuz geschaltete Kommunikation innerhalb der Netzwerkeinrichtungen kann auch beim Ausfall oder Fehlerfall einer der Steuereinrichtungen, beispielsweise als Babbling Idiot, die Kommunikation der redundant vorgesehenen Steuereinrichtungen mit den übrigen Netzwerkeinrichtungen über den weitren redundanten Datenpfad weitergeführt werden.

Ein insbesondere als Ethernet-Kommunikationsnetzwerk ausgestaltetes Netzwerk führt beispielsweise zu einer ringförmigen Ausbildung oder Kopplung der Netzwerkeinrichtungen untereinander. Die redundante Ausführung der Netzwerkeinrichtung mit doppelten Switch- und Steuereinrichtungen sowie ermöglichter interner Kommunikation in der jeweiligen Netzwerkeinrichtung bietet einen sicheren und zuverlässigen Datentransport im Kommunikationsnetzwerk.

In einer Ausführungsform der Netzwerkanordnung haben mindestens zwei Netzwerkeinrichtungen jeweils einen ersten physikalischen Port, welcher der ersten Steuereinrichtung zum Senden von Daten zugeordnet ist, einen weiteren ersten physikalischen Port, welcher der ersten Steuereinrichtung zum Empfangen von Daten zugeordnet ist, einen zweiten physikalischen Port, welcher der zweiten Steuereinrichtung zum Empfangen von Daten zugeordnet ist, und einen weiteren zweiten physikalischen Port, welche der zweiten Steuereinrichtung zum Senden von Daten zugeordnet ist. Dabei ist der erste physikalische Port einer ersten Netzwerkeinrichtung an einen ersten weiteren physikalischen Port einer zweiten Netzwerkeinrichtung gekoppelt. Ein zweiter weiterer physikalischer Port der zweiten Netzwerkeinrichtung ist an einen zweiten physikalischen Port der ersten Netzwerkeinrichtung gekoppelt. Eine entsprechende Kopplung kann beispielsweise durch eine Über-Kreuz-Verkabelung außerhalb der Netzwerkeinrichtungen erzielt werden. Denkbar ist beispielsweise eine besondere Ausgestaltung von Twisted-Pair-Kabeln und eine entsprechende Ausgestaltung oder Programmierung der Netzwerkeinrichtungen.

Das Kommunikationsnetzwerk selbst kann eine Ethernet-Infrastruktur umfassen. Die optionalen Switch-Einrichtungen kann auch als Bridge- oder Router-Einrichtungen bezeichnet werden. Bei Netzwerkeinrichtungen spricht man auch von Netzwerk-Knoten, Netzwerk-Komponenten oder Netzwerk-Elementen.

Die Netzwerkanordnung ist insbesondere Teil eines Fahrzeugs.

Es wird ferner ein Verfahren zum Betreiben einer Netzwerkanordnung, wie sie zuvor angedeutet ist, vorgeschlagen. Dabei werden in einer jeweiligen Netzwerkeinrichtung an dem ersten physikalischen Port der Netzwerkeinrichtung von dem Übertragungsmedium empfangene Daten an den zweiten physikalischen Port weitergeleitet und von dem zweiten physikalischen Port an das Übertragungsmedium gesendet.

Eine Implementierung des Verfahrens mit Netzwerkeinrichtungen oder einer Netzwerkanordnung, wie zuvor beschrieben, liefert eine zuverlässige und redundante Bereitstellung von beispielsweise Sensordaten in dem Netzwerk.

Das Verfahren kann ferner mindestens einen der folgenden Verfahrensschritte umfassen:
Erzeugen von ersten Daten durch die erste Steuereinrichtung und von zweiten Daten durch die zweite Steuereinrichtung. Dabei sind die ersten Daten und die zweiten Daten durch eine vorgegebene Codierung miteinander verknüpft;
Übermitteln der ersten Daten von der ersten Steuereinrichtung an die zweite Steuereinrichtung, und Übermitteln der zweiten Daten von der zweiten Steuereinrichtung an die erste Steuereinrichtung;
Senden der ersten Daten und der zweiten Daten über einen ersten Kommunikationspfad von dem physikalischen Port der ersten Steuereinrichtung zu dem physikalischen Port der zweiten Steuereinrichtung; und/oder
Senden der ersten Daten und der zweiten Daten über einen zweiten Kommunikationpfad von dem physikalischen Port der zweiten Steuereinrichtung zu dem physikalischen Port der ersten Steuereinrichtung.

Dabei durchlaufen die Daten des ersten und des zweiten Kommunikationspfades vorzugsweise dieselben Netzwerkeinrichtungen in entgegengesetzter Richtung.

Als Codierung sind verschiedene logische Verknüpfungen zwischen den Dateninhalten der ersten und zweiten Daten denkbar. Die ersten und zweiten Daten, welche über eine vorgegebene Kodierung miteinander verknüpft sind, können beispielsweise durch eine Bit-Inversion erzeugt sein. Die vorgegebene Kodierung lässt eine Konsistenzprüfung der beiden Daten miteinander zu. Ist beispielsweise durch den Datentransfer über das Netzwerk eines der Daten(pakete) gestört, kann dies durch Vergleich mit dem jeweils anderen Daten(paket) unter Berücksichtigung der jeweiligen Kodierung erkannt werden.

Ausführungsformen des Verfahrens umfassen ferner Vergleichen der ersten Daten mit den zweiten Daten in der ersten und/oder zweiten Steuereinrichtung zum Erzeugen eines Vergleichsergebnisses und Passivieren der Netzwerkeinrichtung in Abhängigkeit von dem Vergleichsergebnis.

Ergibt sich beispielsweise eine Inkongruenz der ersten und zweiten Daten untereinander, kann in der Netzwerkanordnung erkannt werden, dass mindestens eine der Steuereinrichtungen oder Switch-Einrichtungen und/oder der Übertragungskanäle fehlerhaft arbeitet. Durch die redundante Ausgestaltung der Datenkommunikation können sich Steuereinrichtungen selbst passivieren und liefern somit keine fehlerhaften Daten mehr ins Netzwerk. Dennoch ist eine gesicherte Bereitstellung von Daten noch zuverlässig möglich.

Die unkodierten bzw. kodierten Daten werden somit von einem ersten Kanal, der von einer ersten Steuereinrichtung ausgeht, zu einem Kanal, welcher der zweiten Steuereinrichtung zugeordnet ist, versendet. Dies erfolgt auch umgekehrt, wodurch die sendende Steuerungskomponente feststellen kann, ob der jeweils andere Kanal, welcher der zweiten (redundanten) Steuereinrichtung zugeordnet ist, dasselbe Datenergebnis hat. Insofern kann festgestellt werden, ob die zugeordneten Ethernet-Switches bzw. die Switch-Einrichtungen zuverlässig funktionieren. Wird erkannt, dass mindestens einer der der Steuereinrichtung zugeordneten Switch-Einrichtungen fehlerhaft agiert, passiviert sich vorzugsweise die sendende Steuereinrichtung.

Weiterhin wird ein Computerprogrammprodukt vorgeschlagen, welches auf einer oder mehreren programmgesteuerten Einrichtungen die Durchführung des wie oben erläuterten Verfahrens zum Betreiben einer Netzwerkanordnung veranlasst.

Ein Computerprogramm-Produkt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen. Als programmgesteuerte Einrichtung kommt insbesondere eine wie vorbeschriebene Netzwerkeinrichtung in frage.

Weitere mögliche Implementierungen der Erfindung umfassen auch nicht explizit genannte Kombinationen von zuvor oder im Folgenden bezüglich der Ausführungsbeispiele beschriebenen Verfahrensschritte, Merkmale oder Ausführungsformen des Verfahrens, der Netzwerkanordndung, der Netzwerkeinrichtung oder eines Netzwerk-Knotens. Dabei wird der Fachmann auch Einzelaspekte als Verbesserungen oder Ergänzungen zu der jeweiligen Grundform der Erfindung hinzufügen oder abändern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1, 2:: Darstellungen von nicht-erfindungsgemäßen Netzwerkeinrichtungen
- Fig. 3 - 8:: schematische Darstellungen von Ausführungsformen von Netzwerkeinrichtungen
- Fig. 9:: Darstellung einer nicht-erfindungsgemäßen Netzwerkanordnung
- Fig. 10-20:: schematische Darstellungen von Ausführungsformen einer Netzwerkanordnung mit Kommunikationsabläufen zur Erläuterung von Verfahrensaspekten zum Betreiben derselben.

In den Figuren sind gleiche oder funktionsgleiche Elemente mit denselben Bezugszeichen versehen worden, sofern nichts anderes angegeben ist.

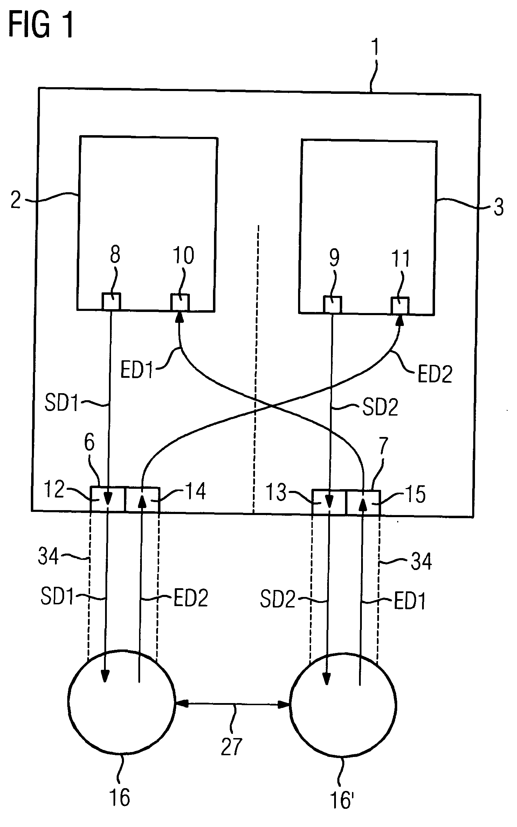

Die Fig. 1 zeigt eine schematische Darstellung einer Netzwerkeinrichtung 1, die insbesondere geeignet ist, in einer geswitchten Netzwerkumgebung, wie beispielsweise einer Ethernet-Protokoll-Umgebung, insbesondere nach

IEEE 802.3 eingesetzt zu werden.

Die Netzwerkeinrichtung 1 ist mit redundanten, also zwei Steuereinrichtungen 2, 3 ausgestattet. Die Steuereinrichtungen 2, 3 können als Mikrocontroller oder auch Sensoreinrichtungen implementiert sein und dienen beispielsweise in einem Automatisierungssystem oder einer Fahrzeugsteuerung der Durchführung von vorgegebenen programmierten Aufgaben. Beispielsweise kann es sich bei der Steuereinrichtung 2, 3 um einen Mikrocontroller handeln, der bestimmte Stellwerte beispielsweise für Aktoren im Fahrzeug berechnet und in dem Netzwerk bereitstellt.

Die Netzwerkeinrichtung 1 ist mit einem ersten physikalischen Port 6 und einem zweiten physikalischen Port 7 ausgestattet. Der erste physikalische Port 6 ist der ersten Steuereinrichtung 2 zugeordnet, und der zweite physikalische Port 7 ist der zweiten Steuereinrichtung 3 zugeordnet. Mit Hilfe der physikalischen Ports 6, 7 ist eine Anbindung an eine physikalische Netzwerkstruktur 16, 16' möglich. Der jeweilige physikalische Port 6, 7 hat dabei externe Sendeanschlüsse 12, 13 und externe Empfangsanschlüsse 14, 15. Die Sendeanschlüsse 12, 13 dienen dazu, Daten SD1, SD2 über einen physikalischen Link in das jeweilige Übertragungsmedium 16, 16' einzukoppeln. Es kann sich beispielsweise um Netzwerkkabel 34 handeln. Allerdings sind auch andere physikalische Übertragungsmedien, wie Lichtleiter oder Funk, denkbar. In der Fig. 1 ist eine Verknüpfung der Übertragungsmedien 16, 16' über den Doppelpfeil 27 angedeutet. Insgesamt kann sich eine ringförmige Netzwerkstruktur ergeben, wenn mehrere Netzwerkeinrichtungen 1 miteinander verkoppelt werden. Beim Einsatz in Ethernetstrukturen ist nur eine Ringstruktur aus Ethernetkabeln notwendig, wobei sich zwei Kommunikationsringrichtungen ergeben. In den Figuren ist dies durch die Pfeile angedeutet. Beispielsweise sind jeweils ein Kabel 34 an die physikalischen Port 6, 7, angesteckt, wobei die Kabel bidirektionale Datenübertragung erlauben.

Wie in der Fig. 1 dargestellt, hat die erste Steuereinrichtung 2 einen internen Sendeanschluss 8 und einen internen Empfangsanschluss 10. Die zweite Steuereinrichtung 3 hat einen internen Sendeanschluss 9 und einen internen Empfangsanschluss 11. Innerhalb der Netzwerkeinrichtung 1 werden Sendedaten SD1, welche von der ersten Steuereinrichtung 2 an dem internen Sendeanschluss 8 anliegen, an den externen Sendeanschluss 12 des ersten physikalischen Ports 6 geleitet. Von dort gelangen die Sendedaten SD1 in das jeweilige Übertragungsmedium 16.

Die zweite Steuereinrichtung 3 kann ebenfalls Sendedaten SD2 erzeugen, welche von dem internen Sendeanschluss 9 an den externen Sendeanschluss 13 des zweiten physikalischen Ports 7 geleitet werden. In konventionellen Netzwerkeinrichtungen, die auch mit redundanten Steuereinrichtungen 2, 3 ausgestattete sein können, werden meist die Empfangsdaten am ersten physikalischen Port der ersten Steuereinrichtung zugeleitet und die an dem zweiten physikalischen Port empfangenen Daten an die zweite Steuereinrichtung geleitet.

Bei der Netzwerkeinrichtung 1 ist netzwerkeinrichtungsintern der externe Empfangsanschluss 14 des ersten physikalischen Ports 6 mit dem internen Empfangsanschluss 11 der zweiten Steuereinrichtung 3 verbunden. Empfangsdaten ED2, die aus dem Übertragungsmedium 16 an dem externen Empfangsanschluss 14 ankommen, gelangen daher an die zweite Steuereinrichtung 3 als Empfangsdaten ED2.

An dem zweiten externen Empfangsport 15 empfangene Daten ED1 gelangen netzwerkeinrichtungsintern an die erste Steuereinrichtung 2. Daher ist der externe Empfangsport 15 des zweiten physikalischen Ports 7 an dem internen Empfangsanschluss 10 der ersten Steuereinrichtung 2 verbunden.

Die jeweilige Verbindung zwischen den Anschlüssen 8 und 6, 9 und 13, 14 und 11 sowie 15 und 10 erfolgt beispielsweise über eine feste Verdrahtung innerhalb der Netzwerkeinrichtung 1. Die Verdrahtung oder Kopplung kann durch Leiterbahnen oder Drähte erfolgen, die für die jeweilige physikalische Übertragung der Daten SD1, ED1, SD2, ED2 geeignet sind. Mit Hilfe einer Netzwerkeinrichtung 1, wie es in der Fig. 1 dargestellt ist, kann eine Netzwerkanordnung mit unabhängigen ringförmigen Kommunikationspfaden innerhalb eines einzigen ringförmigen physikalischen Kommunikationsnetzes aufgebaut werden.

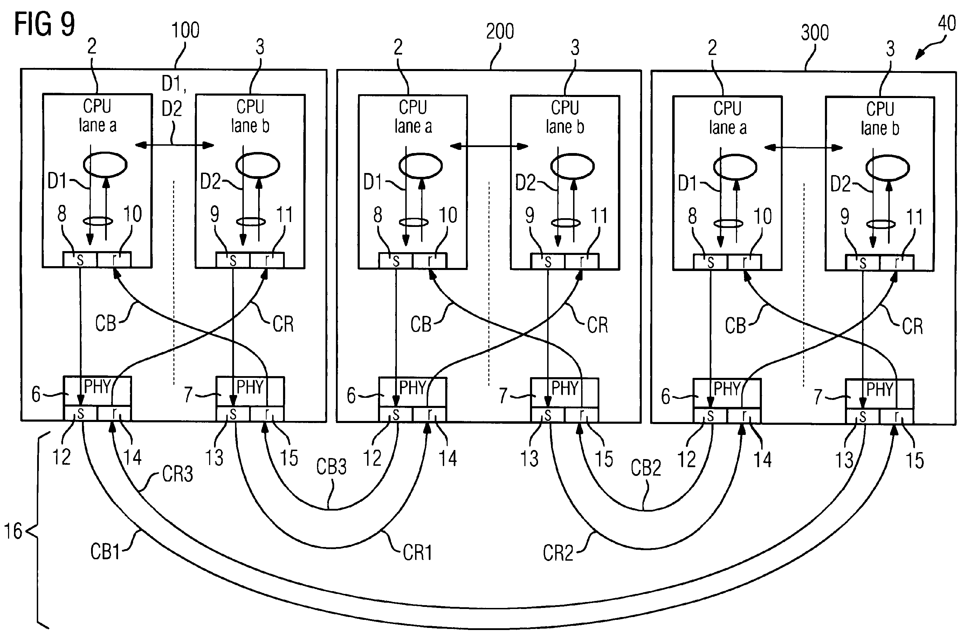

Die Fig. 9 zeigt eine schematische Darstellung einer Netzwerkanordnung, welche mit Netzwerkeinrichtungen, wie sie in der Fig. 1 dargestellt sind, aufgebaut ist. Eine entsprechende Netzwerkanordnung 40 bzw. ein Kommunikationsnetzwerk kann insbesondere auf Ethernet-Basis mehrere in einem Ring gekoppelte Netzwerkeinrichtungen 100, 200, 300 umfassen. Die Netzwerkeinrichtungen 100, 200, 300 sind im Wesentlichen gleichartig aufgebaut und ähneln in ihrer Konfiguration und Ausstattung der in der Fig. 1 gezeigten. Ferner ist eine direkte Kommunikationsmöglichkeit jeweils zwischen den beiden Steuereinrichtungen 2, 3 einer Netzwerkeinrichtung 100, 200, 300 vorgesehen. Dadurch können Daten zwischen den beiden Steuereinrichtungen 2, 3 auf Konsistenz geprüft werden.

Grundsätzlich sollen die Dateninhalte, welche von den Steuereinrichtungen 2 und 3 erzeugt werden, gleich sein. Damit wird eine redundante Daten- oder Steuerdatenerzeugung geschaffen, welches eine erhöhte Sicherheit im Netzwerk 40 bereitstellt. Jede der Netzwerkeinrichtungen 100, 200, 300 hat zwei Steuereinrichtungen oder CPUs 2, 3, die jeweils interne Sende- und Empfangsanschlüsse 8, 9, 10, 11 haben. Die Sende- und Empfangsanschlüsse 8, 9, 10, 11 können beispielsweise Pads oder elektrische Anschlüsse eines Mikrocontroller-Bausteins sein.

Ferner hat jede Netzwerkeinrichtung 100, 200, 300 physikalische Ports 6, 7. Die physikalischen Ports 6, 7 dienen dem Ankoppeln an eine physikalische Netzwerkinfrastruktur 16, die beispielsweise aus einer Verdrahtung mittels Netzwerkkabeln bestehen kann. Jeder physikalische Port 6, 7 hat dabei Sendeanschlüsse 12, 13 und Empfangsanschlüsse 14, 15. Die Netzwerkeinrichtungen 100, 200, 300 sind derart miteinander verbunden, dass zwei unabhängig voneinander arbeitende Ringe innerhalb eines einzigen physikalischen ringförmigen Netzwerkes entstehen.

Eine erste Kommunikationspfadstruktur ergibt sich durch die Kopplung des ersten externen Sendeanschluss 12 des physikalischen Ports 6, welcher der ersten Steuereinrichtung 2 in der ersten Netzwerkeinrichtung 100 zugeordnet ist, mit dem externen Empfangsanschluss 15 des zweiten physikalischen Ports 7, welcher der zweiten Steuereinrichtung 3 der dritten Netzwerkeinrichtung 300 zugeordnet ist. Dieser Zweig ist mit CB1 bezeichnet. Der Kommunikationsring setzt sich fort durch Verbindung des externen Sendeanschluss 12 des ersten physikalischen Ports 6, welcher der ersten Steuereinrichtung 2 der dritten Netzwerkeinrichtung 300 zugeordnet ist, mit dem externen Empfangsanschluss 15 des zweiten physikalischen Ports 7, der der zweiten Steuereinrichtung 3 der zweiten Netzwerkeinrichtung 200 zugeordnet ist. Dieser Zweig ist mit CB2 bezeichnet. Der Ring schließt sich durch eine Verbindung des externen Sendeanschlusses 12 des ersten physikalischen Ports 6, welcher der ersten Steuereinrichtung 2 der zweiten Netzwerkeinrichtung 200 zugeordnet ist, mit dem externen Empfangsanschluss 15 des zweiten physikalischen Ports 7, welcher der zweiten Steuereinrichtung 3 der ersten Netzwerkeinrichtung 100 zugeordnet ist. Dieser Zweig ist mit CB3 bezeichnet.

Aus den Zweigen CB1, CB2 und CB3 ergibt sich ein ringförmiger Kommunikationspfad. An dem ringförmigen Kommunikationspfad CB1, CB2, CB3 der auch als Lane A bezeichnet werden kann, sind nur erste Steuereinrichtungen 2 der Netzwerkeinrichtungen 100, 200, 300 beteiligt.

Durch eine geeignete Verkopplung der übrigen Sende- und Empfangsanschlüsse 13, 14 der physikalischen Ports 6, 7 ergibt sich ein zweiter Ring, der als Lane B bezeichnet werden kann, zwischen den zweiten Steuereinrichtungen 3 der Netzwerkeinrichtungen 100, 200, 300. Dieser Ring ist aus den Segmenten CR1, CR2 und CR3 aufgebaut und in der Fig. 9 angedeutet. Die Kommunikationsrichtung der beiden Ringe bzw. Lane A oder Lane B sind entgegengesetzt orientiert. Es ergeben sich durch die kreuzweise Verkopplung der Empfangsdaten, wie es in der Fig. 1 dargestellt ist, quasi unabhängige Ringe oder Lanes A bzw. B innerhalb eines einzigen physikalischen ringförmigen Netzwerkes. Die Teile der Kommunikationsringe innerhalb der Netzwerkeinrichtungen 100, 200, 300 sind mit CB für die "blaue" Lane A und mit CR für die "rote" Lane B bezeichnet.

In der Netzwerkanordnung der Fig. 9 sind keine zusätzlichen Switch-Einrichtungen oder Router-Einrichtungen in den Netzwerkeinrichtungen 100, 200, 300 vorgesehen. Somit übernehmen die Steuereinrichtungen oder Mikrocontroller 2, 3 Aufgaben, wie beispielsweise die Auswahl oder Filterung von empfangenen Datenpaketen, oder eine Überwachung der Datenrate auf den jeweiligen Netzkommunikationsringen. Eine Einsparung von entsprechenden Switches schafft weniger Fehlerquellen.

Eine direkte Kommunikation zwischen den Steuereinrichtungen 2, 3 einer jeweiligen Netzwerkeinrichtung 100, 200, 300 ermöglicht eine Konsistenzprüfung von Daten, welche in der Lane oder dem jeweiligen Kommunikationsring A bzw. B vorliegen. Beispielsweise erzeugen bei einer Implementierung der ersten Netzwerkeinrichtung 100 als Sensor die CPUs 2, 3 dieselben Dateninhalte, welche beispielsweise über eine Bit-Inversion miteinander logisch verknüpft sind.

Die Daten werden ins Netzwerk 16 übertragen und liegen somit redundant und getrennt voneinander im Ring CB1, CB2, CB3 vor sowie unabhängig davon im Ring CR1, CR2, CR3, wobei die beiden Ringe durch die Richtungen in einem einzigen physikalischen ringförmigen duplexen Netzwerk realisiert werden. Sofern beispielsweise eine CPU im Netzwerk 40 fehlerhafte Daten liefert oder beispielsweise als Babbling Idiot auftritt, ist davon aufgrund der physikalischen Entkopplung der beiden Kommunikationsringe nur eine der Ringrichtungen bzw. Lanes betroffen. Trotzdem liegen immer noch Daten der jeweils anderen Ringrichtung im Netzwerk sicher vor.

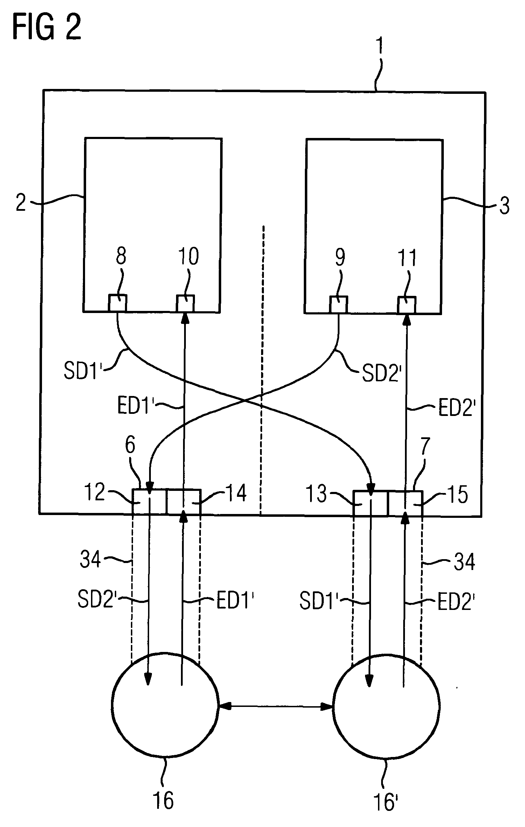

Alternativ zu einem Überkreuzen der Empfangsrichtungen innerhalb der Netzwerkeinrichtungen 100, 200, 300 kann auch ein Überkreuzen der Sendepfade vorgenommen werden, wie es in Figur 2 angedeutet ist. Bei einer entsprechend ausgestalteten Topologie einer Netzwerkanordnung bzw. einer Implementierung mit der alternativen Netzwerkeinrichtung ergeben sich ebenfalls unabhängige Kommunikationspfade voneinander, die physikalisch weitestgehend getrennt sind, obwohl sie innerhalb eines einzigen physikalischen ringförmigen Netzwerkes realisiert sind.

Die Fig. 2 zeigt eine weitere Netzwerkeinrichtung 1 schematisch. Die Netzwerkeinrichtung 1 ist wiederum mit zwei Steuereinrichtungen oder CPUs 2, 3, ausgestattet, die jeweils einen internen Sendeanschluss 8, 9 und einen internen Empfangsanschluss 10, 11 umfassen. Die beiden Steuereinrichtungen 2, 3 sind unabhängig voneinander aufgebaut und beispielsweise getrennt als Chips gefertigt. Die Netzwerkeinrichtung 1 hat zwei physikalische Ports 6, 7, die jeweils einen externen Sendeanschluss 12, 13 und einen externen Empfangsanschluss 14, 15 haben. Mit Hilfe der physikalischen Ports 6, 7 ist eine Ankopplung der Netzwerkeinrichtung 1 an die physikalische Netzwerk-Infrastruktur 16, 16' möglich. Beispielsweise ermöglichen die physikalischen Ports eine Kopplung an Glasfasern oder Netzwerkkabel.

Die Netzwerkeinrichtung 1 ist nun derart eingerichtet, beispielsweise intern verkabelt, dass aus dem Übertragungsmedium 16 empfangene Daten ED1' an dem externen Empfangsanschluss 14 eintreffen und von dort an den internen Empfangsanschluss 10 der ersten Steuereinrichtung 2 geleitet werden. Ebenso werden empfangene Daten ED2' von dem Übertragungsmedium 16' vom externen Empfangsanschluss 15 des zweiten physikalischen Ports 7 an den internen Empfangsanschluss 11 der zweiten Steuereinrichtung 3 geleitet.

Es ist nun ein Überkreuzen der Sendedaten SD1', SD2', welche von den Steuereinrichtungen 2, 3 erzeugt werden, vorgesehen. Dazu ist der interne Sendeanschluss 8 der ersten Steuereinrichtung 2 an den externen Sendeanschluss 13 des zweiten physikalischen Ports 7 gekoppelt. Sendedaten SD1', welche von der ersten Steuereinrichtung 2 erzeugt werden, gelangen somit über den zweiten physikalischen Port 7 an das Übertragungsmedium 16'. Analog ist der interne Sendeanschluss 9 der zweiten Steuereinrichtung 3 an den externen Sendeanschluss 12 des ersten physikalischen Ports 6 gekoppelt. Daten SD2', welche von der zweiten Steuereinrichtung 3 erzeugt werden, gelangen somit über den ersten physikalischen Port 6 als Sendedaten SD2' auf oder in das Übertragungsmedium.

Mit Hilfe der physikalischen Ports lässt sich mit mehreren Netzwerkeinrichtungen 1, wie sie in der Fig. 1 dargestellt sind, ebenfalls ein Kommunikationsnetzwerk, beispielsweise auf Ethernet-Basis oder anderen geswitchten Netzwerkprotokollen aufbauen, wobei die jeweils ersten Steuereinrichtungen 2 und zweiten Steuereinrichtungen 3 unabhängig voneinander agierende Ringstrukturen innerhalb eines einzigen ringförmigen physikalischen Netzwerkes ausbilden.

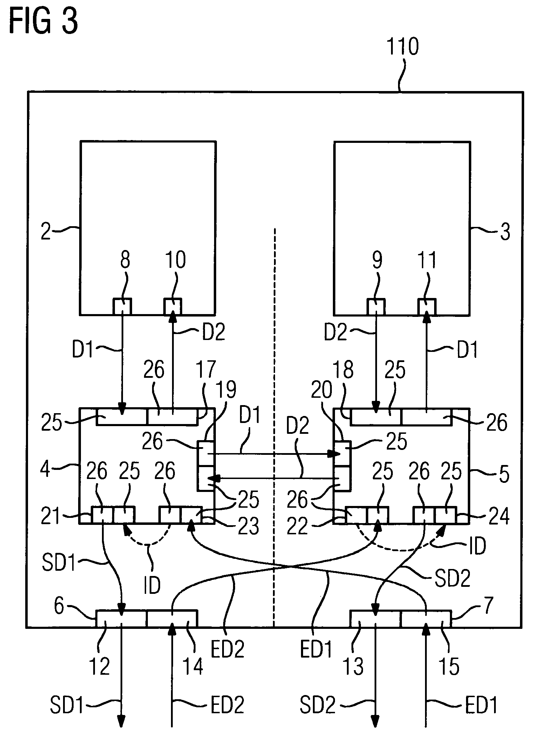

Die Fig. 3 zeigt eine weitere Ausführungsform für eine Netzwerkeinrichtung 110. Dabei sind zusätzliche Switch-Einrichtungen 4,5 vorgesehen. Eine jeweilige Switch-Einrichtung 4, 5 kann die jeweiligen physikalischen Ports 6, 7 als integrierter Baustein umfassen. Eine Switch-Einrichtung 4, 5 schafft beispielsweise die Verknüpfung zwischen den physikalische Ports 6, 7, welche an das physikalische Übertragungsmedium koppeln, und der Media-Access-Control-Schicht (MAC-Layer). Dazu können hier schematisch nicht dargestellte interne Bussysteme oder Mikroprozessoren sowie Speicher für Routing-Tabellen vorgesehen sein.

Die jeweilige Switch-Einrichtung 4, 5 hat dabei Switch-Ports 17-24. Die Switch-Ports 17-24 haben jeweils einen internen Empfangsanschluss 25 und einen internen Sendeanschluss 26. Es ist jeweils ein Switch-Port 17, 18 mit den internen Sendeempfangsanschlüssen 8, 9, 10, 11 der Steuereinrichtungen 2, 3 verbunden.

Ferner sind zwei interne Switch-Ports 19, 20 miteinander gekoppelt, so dass grundsätzlich zwischen den sich ergebenden Lanes oder Kommunikationsringen ein Datenaustausch erfolgen kann. Die Bandbreite für die Datenübertragung zwischen den beiden internen Ports 19, 18 zwischen den Switch-Einrichtungen 4, 5 ist insbesondere deutlich bandbreitenreduziert, damit für den Fehlerfall eines Babbling Idiots die gesamte Datenübertragung nur geringfügig gestört wird. Die Switch-Ports 19, 20 bzw. eine Datenübertragung zwischen den Steuereinrichtungen 2, 3 über die Switches 4, 5 dient beispielsweise einem Konsistenzcheck von komplementär erzeugten Daten D1 und D2 durch die Steuereinrichtungen 2, 3.

Die Switch-Einrichtung 4 ist nun derart eingerichtet, beispielsweise durch eine geeignete Programmierung, dass Daten D1, welche von der ersten Steuereinrichtung 2 über den internen Sendeanschluss 8 an den Switch-Ports 17 bzw. den dortigen Empfangsanschluss 25 gelangen, über den Switch-Port 21, welcher mit dem ersten physikalischen Port 6 verbunden ist, in ein Kommunikationsmedium eingekoppelt werden. Insofern ergibt sich ein Datenpfad von D1 und SD1 über die Anschlüsse 8, 25 des Switch-Ports 17, 26 des Switch-Ports 21 und 12. Analog werden Daten D2, welche von der zweiten Steuereinrichtung 3 erzeugt werden, durch die entsprechend eingerichtete Switch-Einrichtung 5 über die Anschlüsse 25 des Switch-Ports 18, den Anschluss 26 des Switch-Ports 24, an den physikalischen Port 7 bzw. den dortigen externen Sendeanschluss 13 geleitet. Die Daten D2 gelangen somit als Sendedaten SD2 in das Kommunikationsmedium.

Empfangsdaten werden ähnlich wie in der Fig. 1 über Kreuz an die Steuereinrichtungen 2, 3 geroutet oder geleitet. Die an dem ersten physikalischen Port 6 empfangenen Daten ED2 werden beispielsweise durch eine direkte Verdrahtung an den Switch-Port 22 der zweiten Switch-Einrichtung 5 geführt. Ähnlich erfolgt eine überkreuzte Weiterleitung der am zweiten physikalischen Port 7 empfangenen Daten ED1 an den Switch-Port 23 der ersten Switch-Einrichtung 4. Beispielsweise ist der externe Empfangsanschluss 15 direkt mit dem Empfangsanschluss 25 des Switch-Ports 23 gekoppelt. Die empfangenen Daten ED1 werden durch die Switch-Einrichtung 4, welche entsprechend eingerichtet ist, über den Switch-Port 17 an die erste Steuereinrichtung 2 weitergeleitet. Die gekreuzten Empfangsdatenpfade ED1 und ED2 ermöglichen, wie zuvor dargestellt wurde, die Ausbildung einer doppelten Ringstruktur aus entsprechenden Netzwerkeinrichtungen 110.

In einigen Implementierungen von Switch-Einrichtungen, beispielsweise als integrierte Schaltung, wird standardmäßig erwartet, dass alle Anschlüsse eines jeweiligen Switch-Ports belegt sind und Daten empfangen oder senden. Da insbesondere die beiden Switch-Ports 21 und 23 der ersten Switch-Einrichtung 4 und die Switch-Ports 22 und 24 der zweiten Switch-Einrichtung 5 aufgrund der überkreuzten Datenübermittlung teilweise keine Empfangsdaten erhalten (Port 21: Empfangsanschluss 25 und Port 24: Empfangsanschluss 25), kann optional eine interne Verknüpfung der ungenutzten Sendeanschlüsse 26 des Ports 23 und des Ports 22 implementiert werden. Dies ist in der Fig. 3 durch die gepunkteten Pfeile ID angedeutet. Insofern werden interne nicht notwendigerweise sinnvolle Daten ID zwischen Ports einer jeweiligen Switch-Einrichtung übermittelt. Dies kann durch eine interne oder äußere Verkabelung bzw. Verdrahtung an Pins der jeweiligen Switch-Einrichtung 4, 5 erfolgen.

In einigen Standardimplementierungen umfasst eine Switch-Einrichtung oder ein Switch-Chip bereits einen oder mehrere physikalische Ports. Um die überkreuzte Datentransformation zwischen links (Lane A) und rechts (Lane B) bzw. dem Teil aus erster Steuereinrichtung 2, erster Switch-Einrichtung 4 und physikalischem Port 6 einerseits und dem Teil aus zweiter Steuereinrichtung 3, zweiter Switch-Einrichtung 5 und physikalischem Port 7 andererseits zu realisieren, kann der jeweilige Switch-Port bzw. die Switch-Ports 21, 23, 22, 24 hardwaremäßig erweitert werden, beispielsweise über Leiterbahnen auf einem Printed Circuit Board. Diese Leiterbahnen vollziehen dann die Verkreuzung oder Verknüpfung der Eingangsdaten ED1, ED2.

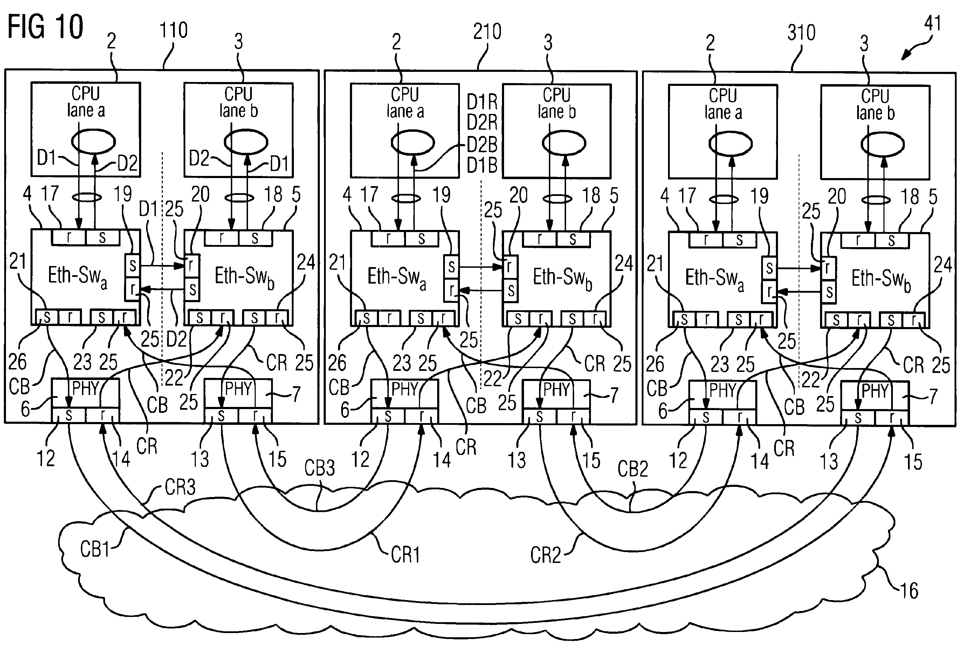

Die Fig. 10 zeigt eine Netzwerkanordnung 41, die eine Ringstruktur aus drei Netzwerkeinrichtungen 110, 210, 310 umfasst, wobei die Netzwerkeinrichtungen 110, 210, 310 wie in der Ausführungsform aufgebaut sind, welche in der Fig. 3 dargestellt ist. Es ergibt sich insbesondere durch die Koppelung der Sende- und Empfangsanschlüsse 12, 13, 14, 15 der physikalischen Ports 6, 7 der Netzwerkeinrichtungen 110, 210, 310 eine Ringstruktur, wie sie in der Fig. 9 bereits angedeutet ist. Insofern erhält man aus den Segmenten CB1, CB2, CB3 einen ersten Kommunikationspfad, der ringförmig ausgebildet ist und auch als Lane A bezeichnet werden kann. Man spricht auch von dem "blauen" Kommunikationspfad in Zusammenhang mit den Ausführungsformen, die hier dargestellt sind. Ein zweiter mit Kommunikationsrichtung entgegengesetzt dem ersten Kommunikationspfad der Lane A ergibt sich aus den Segmenten CR1, CR2 und CR3. Der "rote" Kommunikationspfad ist auch als Lane B bezeichnet.

Durch die Über-Kreuz-Verknüpfung der Daten innerhalb der Netzwerkeinrichtungen 110, 210, 310, wie es in der Fig. 3 erläutert ist, ergeben sich physikalisch unabhängige ringförmige Netze innerhalb eines einzigen ringförmigen physikalischen Netzwerkes. Eine Kommunikation oder ein Datenabgleich zwischen den beiden Lanes A oder B kann durch die intern miteinander gekoppelten Switch-Ports 19, 20 in jeder der Netzwerkeinrichtungen 110, 210, 310 erfolgen. Die interne Über-Kreuz-Verschaltung der beiden ringförmigen Netzwerkstrukturen sind mit CB für die blaue Lane A angedeutet und mit CR für die rote Lane B. Falls in einem der Elemente, beispielsweise einem Switch oder einer CPU, ein Fehler auftritt, der sie in der Art eines Babbling Idiot unsinnige Daten in ein Netzwerksegment absenden lässt, betrifft dies nur jeweils eine Lane, nicht jedoch das gesamte Netzwerk, da die physikalischen Komponenten, die am Datentransport über Lane A und die Lane B beteiligt sind, physikalisch voneinander unabhängig sind, obwohl die Lane A und Lane B die beiden Richtungen in einem einzigen Kommunikations-Ring sind. Die interne Verknüpfung zwischen Lanes durch die Switch-Ports 19, 20 kann dabei mit einer Bandbreitenreduktion versehen sein.

Grundsätzlich können die Netzwerkeinrichtungen 110, 210, 310 derart ausgerichtet sein, dass nur Daten, die direkt von der CPU 2 oder 3 der jeweiligen Switch-Einrichtung 4, 5 übermittelt werden, direkt zum Datenabgleich oder Monitoring bzw. Überwachen innerhalb der jeweiligen CPU 2, 3 übertragen werden. Beispielsweise kann die CPU 2 der ersten Netzwerkeinrichtung 110 Daten D1 erzeugen und die zweite CPU 3 Daten D2. Im ungestörten Fall sind die Daten D1 und D2 durch eine Codierung miteinander verknüpft und beinhalten dieselben beispielsweise Sensor- oder Steuerdaten. Die Konsistenz der beiden Datenversionen D1 und D2 wird beispielsweise in einem Monitoring miteinander verglichen, so dass für den Fall einer Inkompatibilität von D1 und D2 sich die CPUs 2, 3 beispielsweise deaktivieren können, da ein Fehler in der Netzwerkeinrichtung oder einer der CPUs vorliegen könnte.

Durch eine direkte Verbindung der physikalischen Ports 6, 7 mit der jeweils anderen Switch-Einrichtung 4, 5 ergibt sich zudem eine erhöhte Datenrate oder Übertragungsgeschwindigkeit, da beispielsweise am Empfangsport 14 des ersten physikalischen Ports 6 der ersten Netzwerkeinrichtung 110 die empfangenen Daten direkt zum Empfangsanschluss des Switch-Ports 22 der anderen Switch-Einrichtung 5 laufen und nicht in einem Switch- oder Routing-Verfahren in einer Switch-Einrichtung verarbeitet werden müssen.

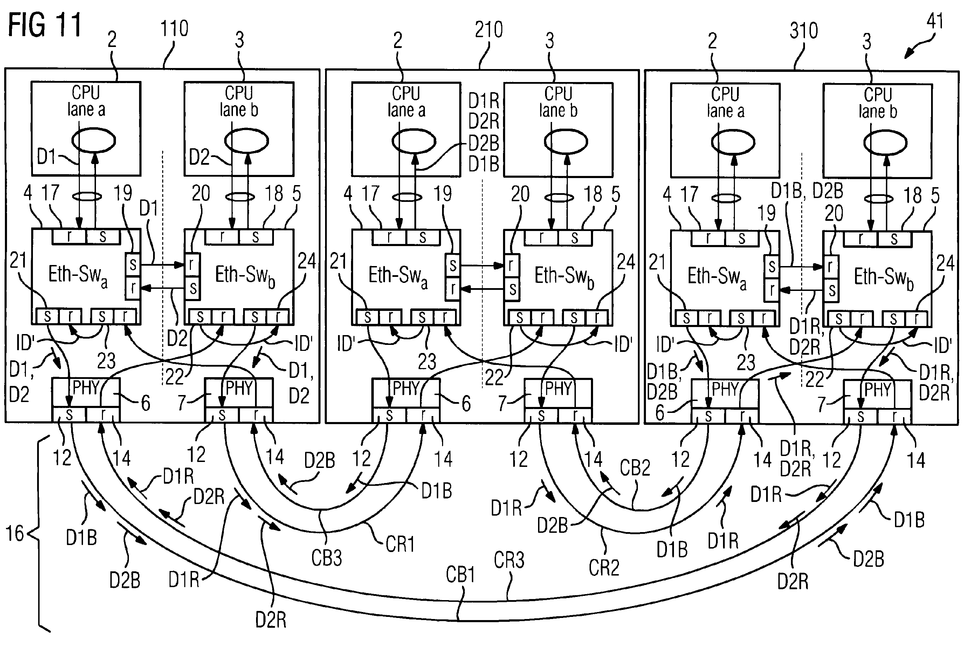

In der Fig. 11 ist eine Abwandlung einer Netzwerkanordnung 41 dargestellt. Wie bereits im Hinblick auf die Fig. 3 erläutert wurde, ist denkbar, dass insbesondere Standard-Switch-Bauelemente Daten an jedem Sende- oder Empfangsanschluss erwarten.

Neben der verkreuzten internen Empfangsdatenübermittlung sind die in der Darstellung der Fig. 10 nicht benutzten Sende- und Empfangsanschlüsse der Switch-Ports miteinander verknüpft. Sendeanschlüsse sind mit S bezeichnet, Empfangsanschlüsse mit R. Beispielsweise ist der Sendeanschluss des Ports 23 an den Empfangsanschluss des Ports 21 gekoppelt. Dies ist mit dem Pfeil ID' angedeutet. Außerdem ist der Sendeanschluss des Ports 22 an den Empfangsanschluss des Ports 24 gekoppelt. Dies ist ebenfalls mit dem Pfeil ID' angedeutet.

Insbesondere bei den Ausführungsformen 41 wie sie in den Figuren 10 und 11 gezeigt sind, kann die Bandbreite über die intern miteinander verknüpften Switch-Ports 19, 20 begrenzt werden, damit im Falle eines Babbling Idiots im Netzwerk der reguläre Datenverkehr über die Lane A und Lane B nach wie vor vollzogen werden kann. Beispielsweise kann die Bandbreite empfängerseitig, also jeweils am Empfangsanschluss, und den innerhalb der jeweiligen Switch-Einrichtung 4, 5 vorliegenden Einrichtungen begrenzt werden. Ferner kann eine Priorisierung des Datenverkehrs erfolgen, so dass die internen Datenaustausche D1, D2 (vgl. Netzwerkeinrichtungen 210, 310) über den Ringverkehr priorisiert sind.

In den Darstellungen der Figuren 10 und 11 bezeichnet D1B Daten D1, die von der CPU 2 erzeugt wurden und über die Lane A, also die "blaue" Lane, verlaufen. Daten, die von der zweiten Steuereinrichtung 3 über die Lane B erzeugt werden, sind mit D2R bezeichnet. Analog werden Daten, die von der zweiten Steuereinrichtung 3 stammen und über die "blaue" Lane A laufen, mit D2B bezeichnet. Man erkennt in der Darstellung der Fig. 11, wie schon in der Fig. 10 oder 9, dass die Ringstrukturen unabhängig voneinander einen Datenverkehr realisieren.

Beim Betrieb des Kommunikationsnetzwerkes, wie es in der Fig. 11 dargestellt ist, führen beispielsweise die Netzwerkeinrichtungen 210 und 310 mit ihren Steuereinrichtungen 2, 3 ein Monitoring und einen Konsistenzcheck der beiden miteinander codierten Daten D1 und D2 durch. Dabei erhält beispielsweise die CPU unabhängig voneinander Daten D1 und D2 über die Lane A sowie mit Hilfe der intern miteinander verknüpften Switch-Ports 19, 20 ebenfalls die Daten D1 und D2 von der Lane B. Sofern kein Fehler im Netzwerk vorliegt, sind alle Daten inhaltlich miteinander kompatibel.

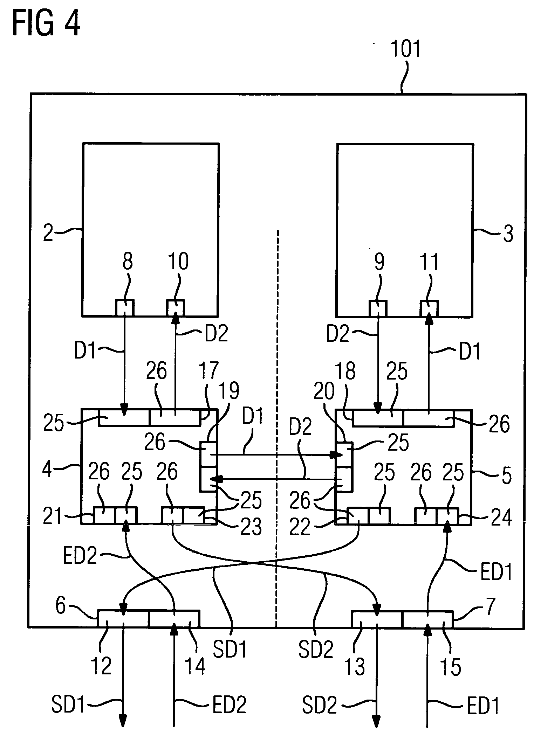

Anstelle der Über-Kreuz-Kopplung der Empfangsdaten innerhalb der jeweiligen Netzwerkeinrichtung 110, 210, 310 kann auch, wie in der Fig. 2 angedeutet ist, eine Über-Kreuz-Kopplung der Sendedaten in einer Netzwerkeinrichtung erfolgen. Die Fig. 4 zeigt daher eine abgewandelte Ausführungsform einer Netzwerkeinrichtung 110, bei der ähnlich wie in der Fig. 2 die Sendepfade zwischen den Lanes über Kreuz liegen.

Die Netzwerkeinrichtung 101 umfasst zwei Steuereinrichtungen oder CPUs 2, 3. Die Netzwerkeinrichtung 101 hat zwei physikalische Ports 6, 7 mit jeweils einem externen Sendeanschluss 12, 13 und einem Empfangsanschluss 14, 15. Es ist jeweils eine Switch-Einrichtung 4 der ersten Steuereinrichtung 2 zugeordnet und eine Switch-Einrichtung 5 der zweiten Steuereinrichtung 3. Die Switch-Einrichtungen 4, 5 haben Switch-Ports 17-24. Davon ist ein Switch-Port 17 der ersten Switch-Einrichtung 4 an die internen Sende- und Empfangsanschlüsse 8, 10 der ersten Steuereinrichtung 2 gekoppelt, und der Switch-Port 18 der zweiten Switch-Einrichtung 5 ist an die Sende- bzw. Empfangsanschlüsse 9, 11 der zweiten Steuereinrichtung 3 gekoppelt. Zwei Switch-Ports 19, 20 sind miteinander gekoppelt, um einen internen und Inter-Lane-Datenaustausch zu erlauben. Ferner umfasst die erste Switch-Einrichtung 4 einen Switch-Port 21, der zum Empfangen von aus dem Netzwerk empfangenen Daten ED2 verwendet wird. Ein zweiter Switch-Port 23 wird zum Versenden von Sendedaten SD2 in einen der Netzwerkringe verwendet.

Analog hat die zweite Switch-Einrichtung 5 einen Switch-Port 22, der zum Versenden von Daten SD1 verwendet wird, und einen Switch-Port 24, der zum Empfangen von Daten ED1 aus dem Netzwerk verwendet wird. Die an dem externen Empfangsanschluss 14 des ersten physikalischen Ports 6 empfangene Daten ED2 werden beispielsweise durch eine direkte Verdrahtung dem Empfangsanschluss 25 des Switch-Ports 21 zugeleitet. Die von dem Netzwerk empfangene Daten ED1 werden von dem externen Empfangsanschluss 15 des physikalischen Ports 7 an den Empfangsanschluss 25 des Switch-Ports 24 geleitet.

Um eine physikalische Entkopplung von zwei Ringstrukturen zu erzielen, werden, wie in der Fig. 2 angedeutet, Sendedaten, die von der ersten Steuereinrichtung 2 stammen, über den zweiten physikalischen Port 7 abgesetzt, und Sendedaten, die von der zweiten Steuereinrichtung 3 stammen, über den ersten physikalischen Port 6. Daher ist der Sendeanschluss 26 des Switch-Ports 23 der ersten Switch-Einrichtung 4 an den externen Sendeanschluss 13 des zweiten physikalischen Ports 7 verbunden. Der Sendeanschluss 26 des Switch-Ports 22 ist an den externen Sendeanschluss 12 des ersten physikalischen Ports 6 verbunden. Insofern ergibt sich eine Topologie, bei der durch Zusammenschalten mehrerer derartiger Netzwerkeinrichtungen 110 zwei unabhängig voneinander funktionierende ringförmige Kommunikationspfade innerhalb eines einzigen ringförmigen physikalischen Netzwerkes entstehen können.

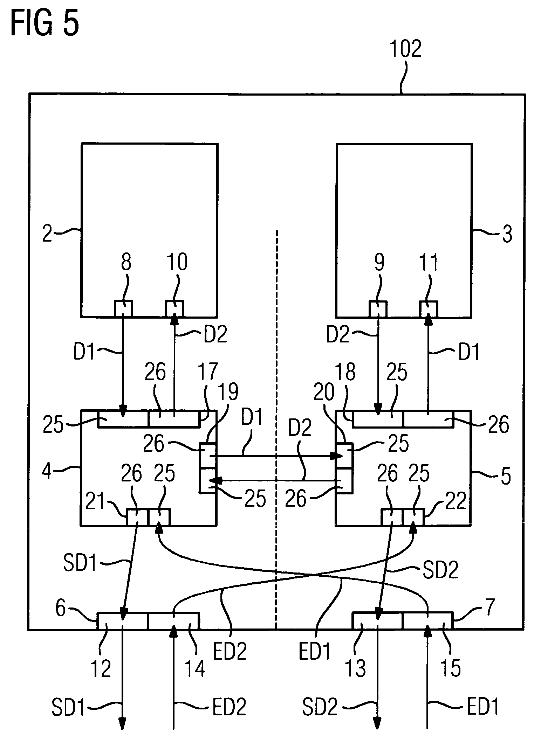

Die Fig. 5 zeigt noch eine Ausführungsform einer Netzwerkeinrichtung 102. Im Wesentlichen umfasst die Netzwerkeinrichtung 102 dieselben Elemente, wie sie in Bezug auf die Ausführungsform der Fig. 3 dargestellt ist. Allerdings sind die Switch-Einrichtungen 4, 5 derart ausgestaltet, dass von einem Switch-Port, der Daten empfängt, gleichzeitig Daten abgesendet werden können. Vorzugsweise werden insbesondere die empfangenen Daten am selben Switch-Port wieder ausgegeben. Dadurch kann die Anzahl von verwendeten Switch-Ports in einer Switch-Einrichtung vermindert werden.

Insofern hat die erste Switch-Einrichtung 4 lediglich drei Switch-Ports 17, 19, 21 und die zweite Switch-Einrichtung 5 ebenfalls drei Switch-Ports 18, 20, 22. Dabei sind die Switch-Ports 19 und 22 für den Interlane-Datenaustausch miteinander gekoppelt. Der externe Sendeanschluss 12 des ersten physikalischen Ports 6 ist an einen Sendeanschluss 26 des Switch-Ports 21 der ersten Switch-Einrichtung 4 gekoppelt. Der Sendeanschluss 26 des Switch-Ports 22 der zweiten Switch-Einrichtung 5 ist an den externen Sendeanschluss 13 des zweiten physikalischen Ports 7 gekoppelt.

Es ist nun von dem externen Empfangsanschluss 15 des zweiten physikalischen Ports 7 eine Verknüpfung zum Empfangsanschluss 25 des Switch-Ports 21 der ersten Switch-Einrichtung 4 vorgesehen. Analog ist der externe Empfangsanschluss 14 des ersten physikalischen Ports 6 an den Empfangsanschluss 25 des Switch-Ports 22 verbunden. Damit ist prinzipiell die Überkreuzkopplung der Empfangsdaten ED1, ED2 realisiert. Bei konventionellen Switch-Einrichtungen ist meist nicht vorgesehen, dass Daten, die über den Empfangsanschluss 25 eines Ports empfangen wurden, über den Sendeanschluss 26 des selben Ports wieder gesendet werden. Die Switch-Ports 21, 22 sind insofern als Kombinationsports der Switch-Einrichtungen 4, 5 realisiert. Man kann davon sprechen, dass die Switch-Einrichtungen 4, 5 eingerichtet sind, Daten zu bouncen. D.h., ein Port, der einen Empfangsanschluss und einen Sendeanschluss umfasst, sendet die am Empfangsanschluss empfangenen Daten über den Sendeanschluss.

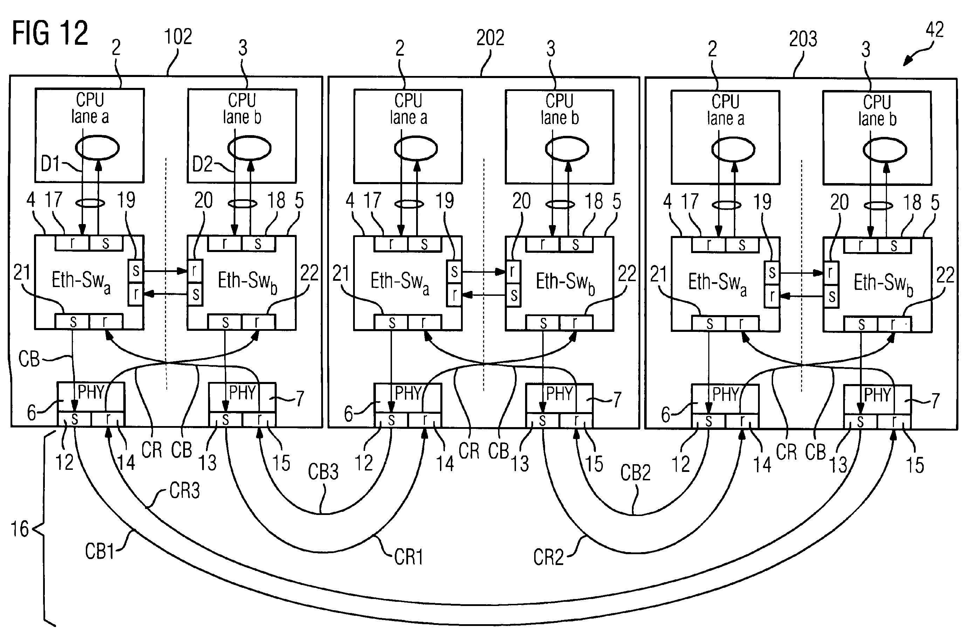

In der Fig. 12 ist ein aus Netzwerkeinrichtungen gemäß der Fig. 5 aufgebautes Netzwerk bzw. eine Netzwerkanordnung 42 schematisch dargestellt. Es sind beispielsweise wieder drei Netzwerkeinrichtungen 102, 202, 203, die, wie in der Fig. 5 dargestellt und erläutert, ausgestaltet sind.

Es ergeben sich durch die Verknüpfung der Sende- bzw. Empfangsanschlüsse S, R, wie schon bezüglich der Fig. 9-11 erläutert wurde, zwei ringförmige Kommunikationsnetze innerhalb eines einzigen ringförmigen physikalischen Netzwerkes. Es ergibt sich die Lane A, CB1, CB2, CB3, CB, und die Lane B, CR1, CR2, CR3, CR. Die interne Verknüpfung der Ports und Anschlüsse in den Netzwerkeinrichtungen 102, 202, 203 erfolgt, wie in der Fig. 5 dargestellt ist. Man hat den Vorteil, dass nur wenige Switch-Ports eingesetzt werden müssen und voneinander physikalisch unabhängige ringförmige Netzwerke entstehen. Die interne Kommunikation zwischen Switch-Ports 19, 20 kann insbesondere bandbreitenbegrenzt sein, um die Auswirkungen von Babbling Idiots, die unsinnige Daten in hoher Frequenz absetzen, im Netzwerk zu reduzieren.

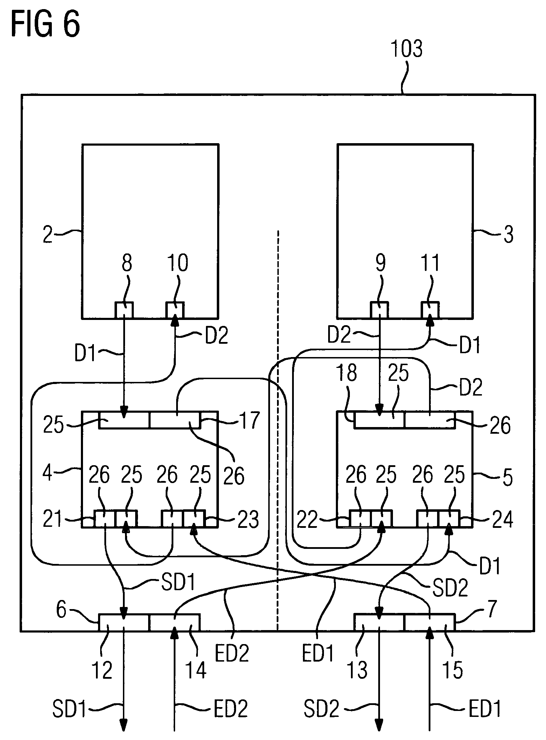

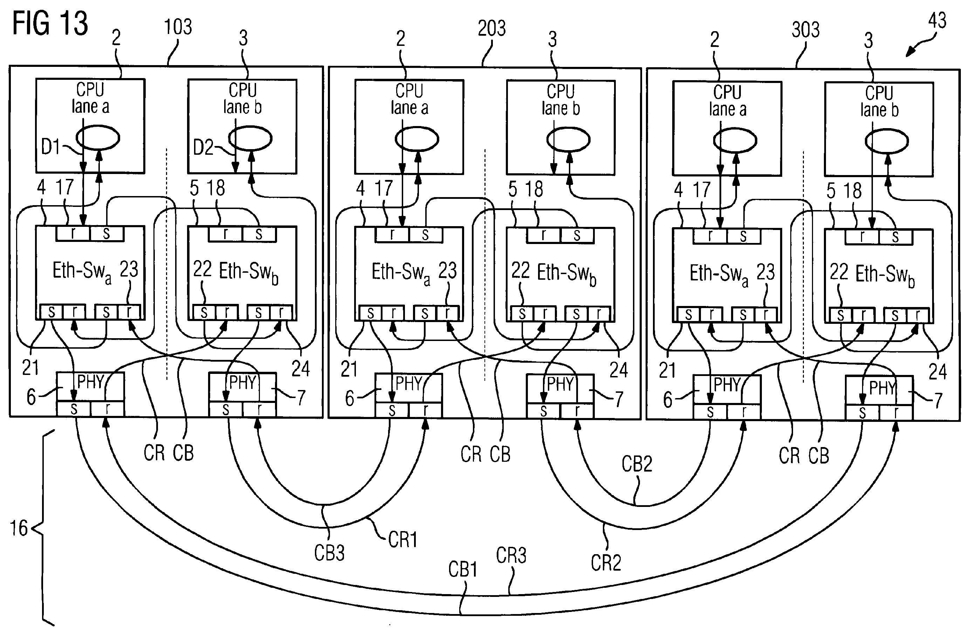

Die Fig. 6 zeigt noch eine weitere Ausführungsform für eine Netzwerkeinrichtung 103. Die Fig. 13 zeigt eine aus entsprechenden Netzwerkeinrichtungen 103, 203, 303 aufgebaute Netzwerkanordnung 43.

Man erkennt in der Fig. 6, dass die Netzwerkeinrichtung 103 zwei Steuereinrichtungen 2, 3 umfasst, die jeweils interne Sendeanschlüsse 8, 9 und interne Empfangsanschlüsse 10, 11 umfassen. Jeder Steuereinrichtung 2, 3 ist eine Switch-Einrichtung 4, 5 zugeordnet. Die Netzwerkeinrichtung 103 umfasst ferner einen ersten physikalischen Port 6, der der ersten Steuereinrichtung 2 zugeordnet ist, und einen zweiten physikalischen Port 7, der der zweiten Steuereinrichtung 3 zugeordnet ist. Jede Switch-Einrichtung 4, 5 hat drei Switch-Ports 17, 18, 21, 22, 23, 24 mit jeweils einem Sendeanschluss und einem Empfangsanschluss 26. In der Fig. 13 sind die Sendeanschlüsse mit S bezeichnet, die Empfangsanschlüsse mit R.

Zum Einkoppeln von Sendedaten, die die erste Steuereinrichtung 2 erzeugt, ist der Empfangsanschluss 25 des Ports 17 der ersten Switch-Einrichtung mit dem Sendeanschluss 8 der Steuereinrichtung 2 gekoppelt. Ferner ist der Sendeanschluss 26 des Switch-Ports 21 der ersten Switch-Einrichtung 4 an den externen Sendeanschluss 12 des ersten physikalischen Ports 6 gekoppelt. Ferner sind von einem Kommunikationsnetz 16 empfangene Daten ED1 von dem Empfangsanschluss 15 des zweiten physikalischen Ports 7 an den Empfangsport 25 des Switch-Ports 23 der ersten Switch-Einrichtung 4 gekoppelt. Insofern ergibt sich eine Lane A im Hinblick auf die Fig. 13 für Daten, welche den Kommunikationspfad CB1, CB2, CB3, CB nutzen.

Analog ist der externe Empfangsanschluss 14 des ersten physikalischen Ports 6 mit dem Eingangsanschluss 25 des Switch-Ports 22 der zweiten Switch-Einrichtung 5 verbunden. Der Sendeanschluss 26 des Switch-Ports 24 der zweiten Switch-Einrichtung 5 ist an den externen Sendeanschluss 13 des physikalischen Ports 7 verbunden. Es ergibt sich somit eine rote Lane B (vgl. Fig. 13) mit den Segmenten CR1, CR2, CR3, CR.

In der Ausführungsform der Fig. 6 sind die Steuereinrichtungen 2, 3 nicht direkt kommunikativ miteinander verbunden. Vielmehr sind die Switch-Einrichtungen 4, 5 derart miteinander verkoppelt und eingerichtet bzw. programmiert, dass auch Daten D1 von der ersten Steuereinrichtung 2 zur zweiten Steuereinrichtung 3 gelangen können bzw. Daten D2 von der zweiten Steuereinrichtung 3 an die erste Steuereinrichtung 2 gelangen. Dadurch kann ein Monitoring mit Datenabgleich hinsichtlich der Plausibilität oder korrekten logischen Verknüpfung der Daten D1 und D2 durchgeführt werden.

Beide Switch-Einrichtungen 4, 5 sind nun derart eingerichtet, dass an einem Port ankommende Daten von demselben Port wieder versendet werden (können). Zum Beispiel werden die Daten D1, welche an dem internen Sendeanschluss 8 der ersten Steuereinrichtung 2 abgreifbar sind, an dem Empfangsanschluss 25 des Ports 17 empfangen und am selben Port über den Sendeanschluss 26 wieder ausgegeben. Der Sendeanschluss 26 des Ports 17 ist an den Empfangsanschluss 25 des Ports 24 verbunden. Die Switch-Einrichtung 5 routet oder switcht die entsprechenden Daten D1, so dass sie vom Sendeanschluss 26 des Ports 22 an den verbundenen internen Empfangsanschluss 11 der zweiten Steuereinrichtung 3 geleitet werden.

Analog ist es möglich, Daten D2, die am internen Sendeanschluss 9 der zweiten Steuereinrichtung 3 vorliegen, über den Empfangsanschluss 25 des Ports 18, den Sendeanschluss 26 des Ports 18, den Empfangsanschluss 25 des Ports 21 und den Sendeanschluss 26 des Ports 23 an den Empfangsanschluss 10 der ersten Steuereinrichtung 2 zu übertragen. Intern kann die erste oder zweite Switch-Einrichtung 4, 5 eine Bandbreitenbegrenzung für diese beiden Datenpfade für die Verbindung der Steuereinrichtung 2, 3 untereinander vollziehen.

Die Fig. 13 zeigt drei gleiche Netzwerkeinrichtungen 103, 203, 303 in einer entsprechend ausgebildeten Netzwerkanordnung 43.

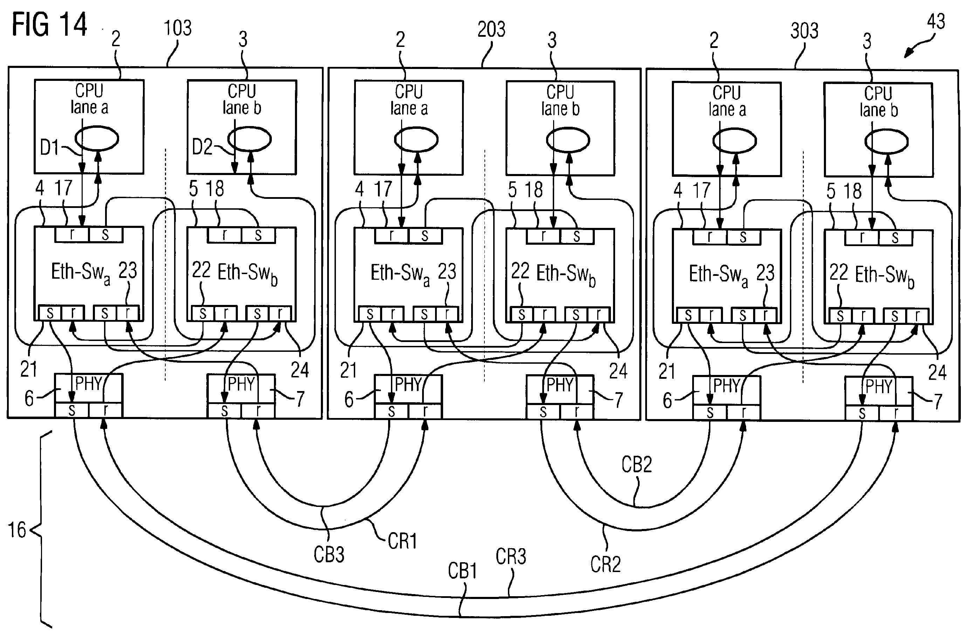

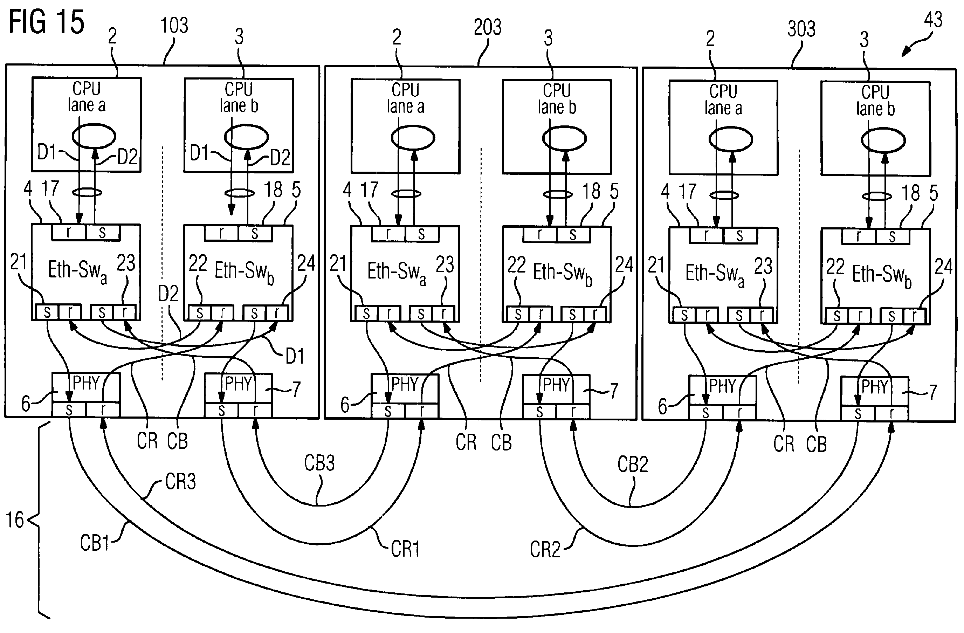

Die Fig. 14 und 15 zeigen abgewandelte Implementierungen einer Netzwerkanordnung 43 mit den Netzwerkeinrichtungen, wie sie in der Fig. 6 dargestellt sind. Die Fig. 14 zeigt hinsichtlich der verkreuzten Kopplung von Empfangspfaden zwischen dem zweiten physikalischen Port 7 und der ersten CPU 2 mit Hilfe der ersten Switch-Einrichtung 4 einerseits bzw. der Kopplung des ersten physikalischen Ports 6 mit der zweiten CPU 3 mit Hilfe der zweiten Switch-Einrichtung 5 andererseits die gleiche Konfiguration, wie hinsichtlich der Fig. 13 beschrieben wurde. Allerdings ist zum internen Datenaustausch oder -abgleich zwischen den CPUs 2, 3 in den Netzwerkeinrichtungen 103, 203, 303 der Sendeanschluss des Switch-Ports 17 der ersten Switch-Einrichtung an den Empfangsanschluss des Switch-Ports 24 der zweiten Switch-Einrichtung gekoppelt. Der Sendeanschluss des Switch-Ports 18 der zweiten Switch-Einrichtung 5 ist an den Empfangsanschluss des Ports 21 der ersten Switch-Einrichtung 4 gekoppelt. Insofern ermöglichen die Switch-Ports 17 und 24 sowie 18 und 21, die Kopplung des Sendeports des Switches 23 an die CPU 3 sowie die Kopplung des Sendeports des Switch-Ports 22 an die CPU 2 eine Verwendung aller Sende- bzw. Empfangsanschlüsse der jeweiligen Switch-Einrichtung 4, 5. Funktionell ergibt sich die gleiche vorteilhafte Datenübertragung wie für die Konfiguration, welche in der Fig. 13 dargestellt ist.

Die Fig. 15 zeigt eine weitere Abwandlung der Netzwerkanordnung 43, bei der eine Kommunikation zwischen den CPUs 2, 3 über eine Kopplung des Sendeanschluss des Switch-Ports 22 der zweiten Switch-Einrichtung 5 an einen Empfangsport des Switch-Ports 21 der ersten Switch-Einrichtung 4 erfolgt. Somit können die Daten D2 an die CPU 2 gelangen. Außerdem ist der Sendeanschluss des Switch-Ports 23 an den Empfangsanschluss des Switch-Ports 24 gekoppelt, so dass die Daten D1, welche von der CPU 2 erzeugt wurden, auch von der CPU 3 mit Hilfe des Switch-Ports 18 beurteilt werden können. Die die jeweilige Lane A oder B überbrückenden Links innerhalb der Netzwerkeinrichtung 103, 203, 303 sind vorzugsweise bandbreitenbegrenzt, so dass ein Babbling Idiot nur handhabbare Störungen verursacht.

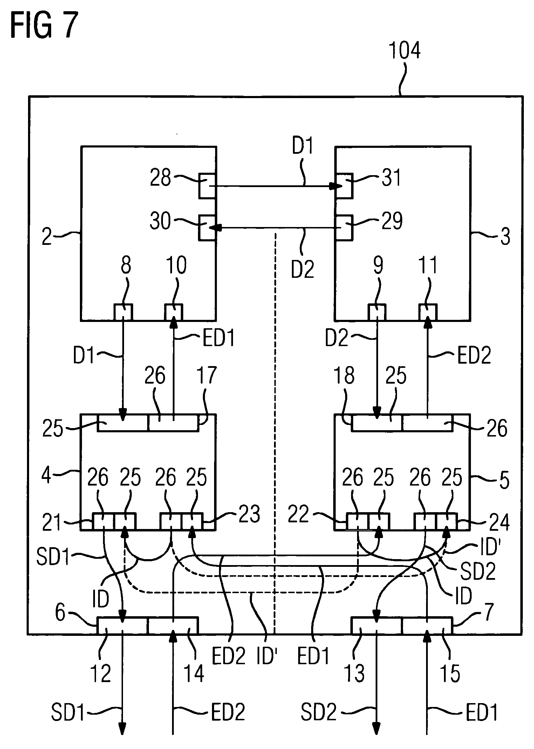

In der Fig. 7 ist nochmals schematisch eine abgewandelte Ausführungsform einer Netzwerkeinrichtung 104 dargestellt. Die Netzwerkeinrichtung 104 umfasst zwei Steuereinrichtungen 2, 3 und jeweils eine der Steuereinrichtung 2, 3 zugeordnete Switch-Einrichtung 4, 5. Die Netzwerkeinrichtung 104 hat einen ersten physikalischen Port 6 mit einem Sendeanschluss 12 und einem Empfangsanschluss 14 und einem zweiten physikalischen Port 7 mit einem Sendeanschluss 13 und einem Empfangsanschluss 15. Die Switch-Einrichtungen 4, 5 haben jeweils drei Switch-Ports 17, 21, 23 und 18, 22, 24. Außerdem haben die Steuereinrichtungen 2, 3 jeweils ein Paar von internen Sende- und Empfangsanschlüssen 28, 29, 30, 31. Die Steuereinrichtungen 2, 3 sind somit direkt miteinander gekoppelt und können Daten D1, D2 austauschen. Da im Betrieb die von der ersten Steuereinrichtung 2 erzeugten Daten D1 mit den von der zweiten Steuereinrichtung 3 erzeugten Daten D2 logisch verknüpft sein sollen, kann insofern ein direkter Konsistenzcheck und damit die Funktion der jeweils anderen oder eigenen Steuereinrichtung 2, 3 erfolgen.

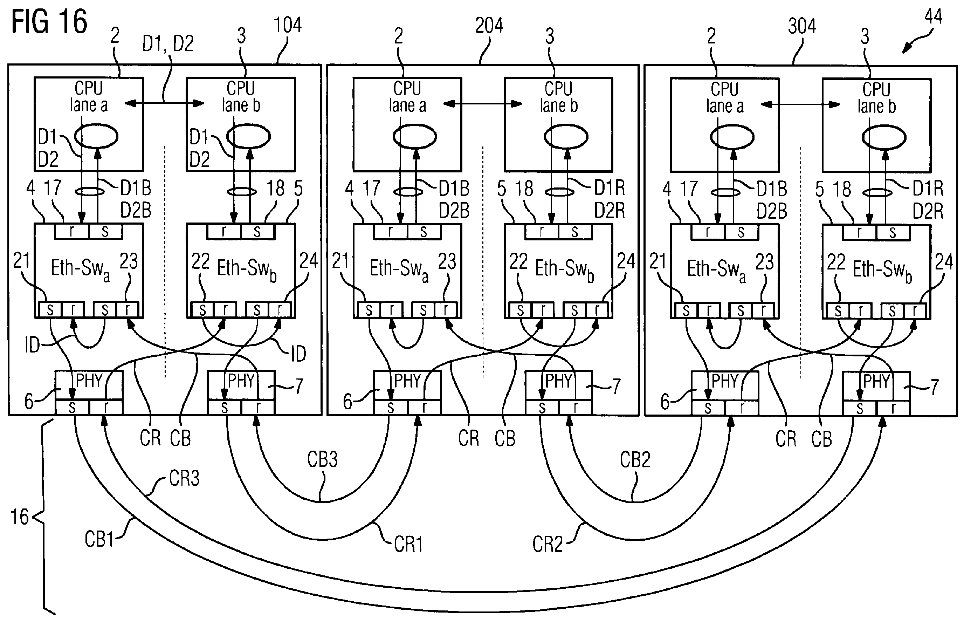

Die Switch-Ports 21, 22, 23 und 24 sind mit den externen Sende- und Empfangsanschlüssen 12, 14, 13, 15 der physikalischen Ports 6, 7, wie in der Fig. 6 dargestellt, verbunden. Außerdem sind zwei Möglichkeiten dargestellt, nicht notwendigerweise belegte Sende- oder Empfangsanschlüsse der Switch-Einrichtungen 4, 5 miteinander zu koppeln, um Links zu simulieren. Eine Alternative besteht in dem Fall ID, der den Sendeanschluss 26 des Switch-Ports 23 mit dem Empfangsport 25 des Switch-Ports 21 koppelt. Ähnlich kann in der zweiten Switch-Einrichtung 5 der Sendeanschluss 26 des Switch-Ports 22 mit dem Empfangsanschluss 25 des Switch-Ports 24 gekoppelt werden. Eine entsprechende Implementierung als Netzwerkanordnung mit zwei Ringstrukturen ist in der Fig. 16 als Netzwerkanordnung 44 dargestellt. Durch die direkte Kopplung der beiden Steuereinrichtungen 2, 3 untereinander durch einen internen Link ergibt sich eine vollständige Entkopplung der Ringrichtungen bzw. der Lane A und Lane B. Empfangsdaten ED1 bzw. ED2 durchlaufen ausschließlich Einrichtungen, die entweder der Lane A oder der Lane B zugeordnet sind.

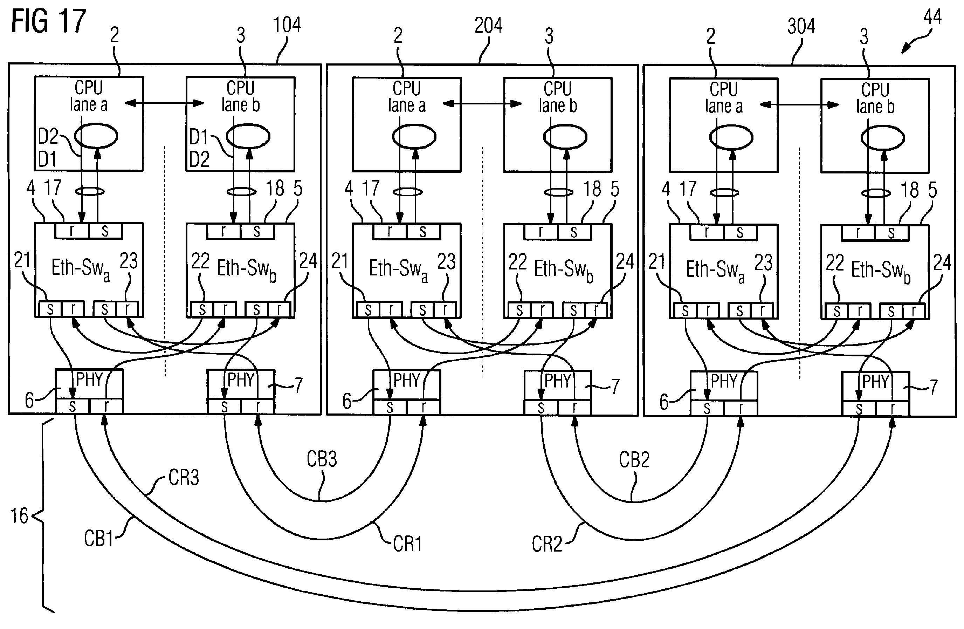

Die Fig. 17 zeigt eine ähnlich ausgestaltete Konfiguration der Netzwerkanordnung 44. Allerdings sind die für die Ringausbildung prinzipiell nicht notwendigen Switch-Ports bzw. Sende- und/oder Empfangsanschlüsse der Switch-Einrichtungen 4, 5 abweichend miteinander verbunden. In der Fig. 7 entspricht die Konfiguration der Fig. 17 den gestrichelten Pfeilen ID'.

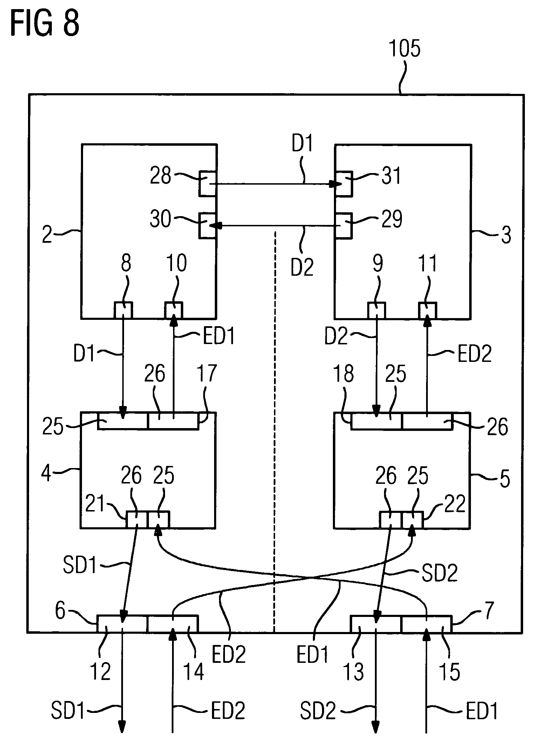

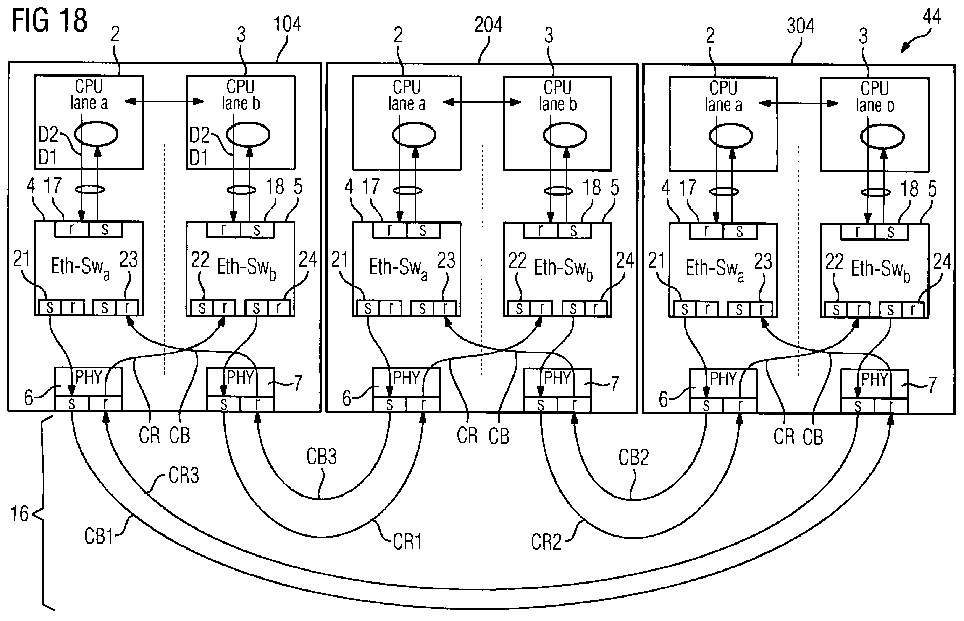

In der Fig. 18 ist schließlich noch eine abgewandelte Konfiguration einer Netzwerkanordnung 44 dargestellt. Dabei ist auf die internen Links ID, wie sie in der Fig. 7 angedeutet sind, verzichtet. Die Ausführungsform der Netzwerkanordnung 44 in Fig. 8 erfordert, dass entsprechend implementierte Switch-Einrichtungen beispielsweise als Standard-ICs in der Lage sind, nur halb geschaltete Ports zu verwalten und trotzdem ein zuverlässiges Routing oder Switching der Daten zu gewährleisten.

In der Fig. 8 ist noch eine Ausführungsform für eine Netzwerkeinrichtung 105 dargestellt. Die Netzwerkeinrichtung 105 ist dabei ähnlich aufgebaut wie die in der Fig. 5 dargestellte. Die Netzwerkeinrichtung 105 hat zwei Steuereinrichtungen 2, 3, die miteinander über interne Sende- und Empfangsanschlüsse 28, 29, 30, 31 kommunikativ miteinander verbunden sind. Es können daher Daten D1, D2 untereinander ausgetauscht werden. Jeder Steuereinrichtung 2, 3 ist eine Switch-Einrichtung 4, 5 zugeordnet. Die Netzwerkeinrichtung 105 hat einen ersten physikalischen Port 6 mit einem Sende- und einem Empfangsanschluss 12, 14 und einen zweiten physikalischen Port 7 mit einem Sende- und einem Empfangsanschluss 13, 15.

Die beiden Switch-Einrichtungen 4, 5 haben jeweils zwei Switch-Ports 17 und 21 sowie 18 und 22. Jeder Switch-Port ist mit einem Sendeanschluss 26 und einem Empfangsanschluss 25 ausgestattet. Ferner haben die Steuereinrichtungen 2, 3 jeweils einen internen Sendeanschluss 8, 9. Der interne Sendeanschluss 8 der ersten Steuereinrichtung 2 ist an den Empfangsanschluss 25 des Switch-Ports 17 der ersten Switch-Einrichtung 4 gekoppelt. Der interne Sendeanschluss 9 der zweiten Steuereinrichtung 3 ist an den Empfangsanschluss 25 des Switch-Ports 18 der zweiten Switch-Einrichtung 5 gekoppelt. Die Sendedaten D1, SD1 der ersten Steuereinrichtung 2 gehen über den ersten physikalischen Port 6 an ein jeweiliges Kommunikationsmedium und die Sendedaten D2, SD2 der zweiten Steuereinrichtung 3 gehen über den zweiten physikalischen Port 7 in das Übertragungsmedium. Daher ist der Sendeanschluss 26 des Switch-Ports 21 mit dem Sendeanschluss 12 des ersten physikalischen Ports verbunden und der Sendeanschluss 26 des Switch-Ports 22 ist mit dem Sendeanschluss 23 des zweiten physikalischen Ports 7 verbunden.

Die Empfangspfade für von einem Übertragungsmedium empfangenen Daten ED1, ED2 sind über Kreuz an die jeweilige andere Switch-Einrichtung 4, 5 geleitet. Daher ist der externe Empfangsanschluss 14 des ersten physikalischen Ports an den Empfangsanschluss 25 des Switch-Ports 22 der zweiten Switch-Einrichtung 5 gekoppelt. Der externe Empfangsanschluss 15 des zweiten physikalischen Ports 7 ist an den Empfangsanschluss 25 des Switch-Ports 21 der ersten Switch-Einrichtung 4 gekoppelt. Die Switch-Einrichtungen 4, 5 sind so eingerichtet, dass an demselben Switch-Port empfangene Daten wieder an dem zugehörigen Sendeanschluss versendet werden. Dadurch ergibt sich eine physikalisch vollständige Trennung der beiden Ringrichtungen und effiziente Ausnutzung von entsprechenden Switch-Bausteinen.

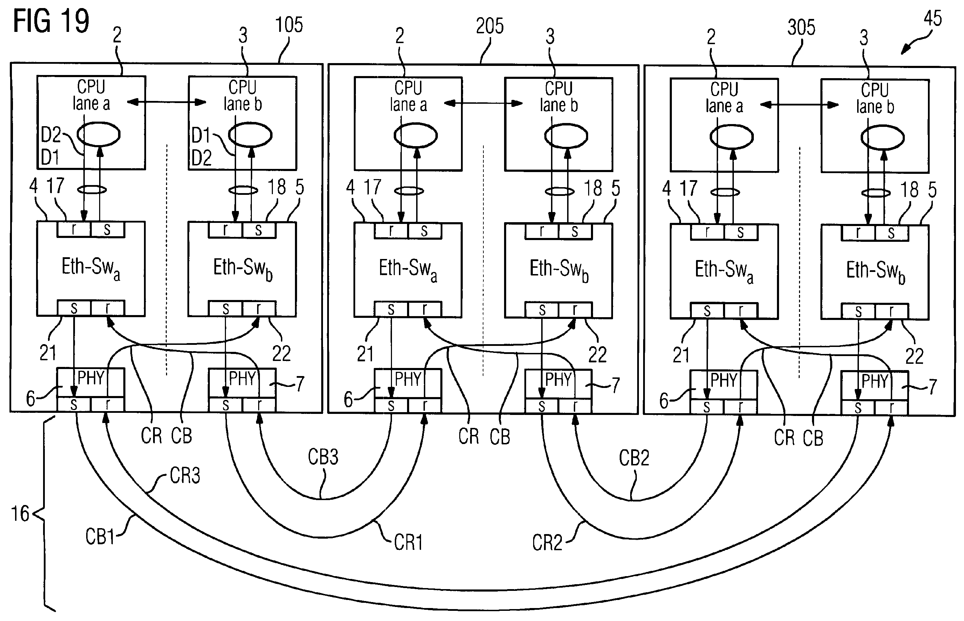

Die sich ergebende Netzwerkanordnung 45 ist in der Fig. 19 zu erkennen. Es entsteht der Ring CB1, CB2, CB3 als Kommunikationspfad der Lane A und der Kommunikationspfad des Rings der Lane B mit den Segmenten CR1, CR2, CR3. Die direkte Kopplung zwischen den CPUs 2, 3 ermöglicht die physikalische vollständige Trennung der beiden Ringrichtungen. Die Störung einer der CPUs 2, 3 oder Switch-Einrichtungen 4, 5 führt somit nie zum Zusammenbruch beider Ringrichtungen gleichzeitig. Fällt beispielsweise die CPU 2 aus, können immer noch Daten von der CPU 3 geliefert werden. Auch der Fehlerfall eines Babbling Idiot lässt sich leicht handhaben, da maximal eine der Ringrichtungen betroffen sein wird. Ist beispielsweise eine Switch-Einrichtung 4 defekt und sendet mit hoher Bandbreite unsinnige Daten, wäre ausschließlich die Ringrichtung CB betroffen bzw. die Lane A. Trotzdem kann über den Ring CR (Lane B) weiterhin ein Datenaustausch innerhalb des Netzwerks 45 erfolgen.

Im Wesentlichen ergibt sich die physikalische Unabhängigkeit der Ringrichtungen und damit redundant möglichen Kommunikationspfade und Daten im Netzwerk durch die überkreuzten Datenverbindungen innerhalb der Netzwerkeinrichtungen. Es ist jedoch auch möglich, die Daten beispielsweise mit Hilfe speziell angepasster Kabel und Buchsen, die an die physikalischen Ports einfacher aufgebauter Netzwerkeinrichtungen angekoppelt werden, zu bewerkstelligen.

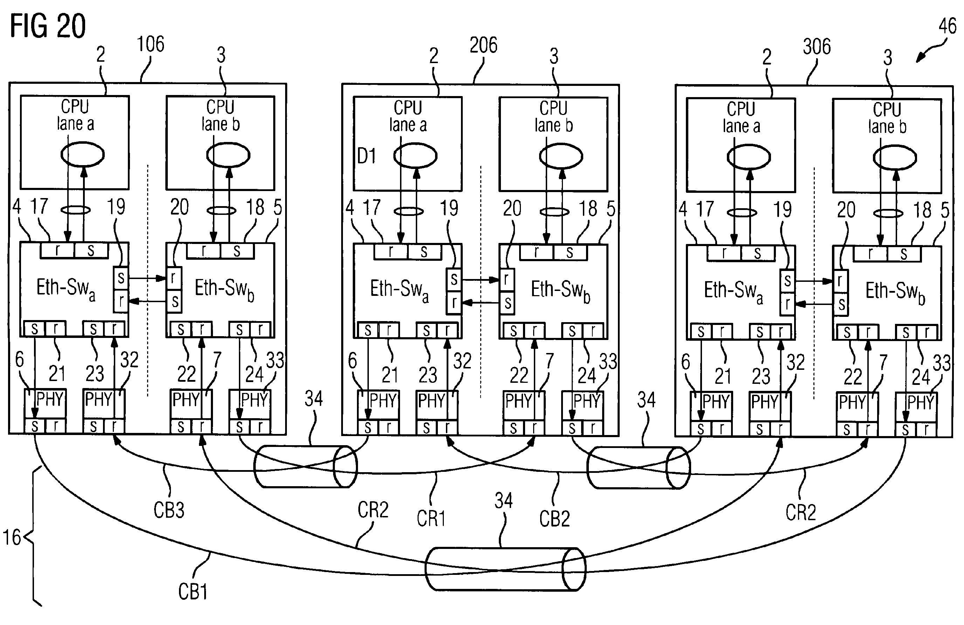

In der Fig. 20 ist eine alternative Ausführungsform einer Netzwerkanordnung 46 dargestellt. Dabei sind Netzwerkeinrichtungen 106, 206, 306 angedeutet, die jeweils eine erste und zweite Steuerreinrichtung bzw. CPU 2, 3 umfassen, eine jeweils zugeordnete Switch-Einrichtung 4, 5 und zwei übliche physikalische Ports 6, 7, 32, 33 für jede Switch-Einrichtung 4, 5 bzw. Steuereinrichtung 2, 3. Die physikalischen Ports 6, 7, 32, 33 können über handelsübliche Stecker beispielsweise nach einem Base-T- oder F-Standard oder mit Hilfe von RJ45-Jacks angekoppelt werden.

Die Switch-Einrichtungen 4, 5 haben dabei Switch-Ports 19, 20, die miteinander gekoppelt sind und eine Kommunikation zwischen den beiden Lanes A und B ermöglichen. Über Switch-Ports 17, 18 ist die jeweilige CPU 2, 3 an die Switch-Einrichtung 4, 5 gekoppelt. Ferner hat jede Switch-Einrichtung 4 zwei Switch-Ports 21, 23 und 22, 24, die jeweils an ein Paar von physikalischen Ports 6, 32 und 7, 33 koppeln.

Um eine Überkreuzung der Datenpfade hinsichtlich der empfangenen Daten für die jeweilige CPU zu erzielen, sind die verwendeten Netzwerkkabel 34 derart ausgestaltet, dass beispielsweise Sendedaten vom physikalischen Port 6 über den Zweig CB1 an den physikalischen Port 32 der Netzwerkeinrichtung 306 gelangen. Damit wird erreicht, dass bei einer ähnlichen Überkreuzung innerhalb der Netzwerkkabel 34 vom physikalischen Port 6 der Netzwerkeinrichtung 306 an den physikalischen Port 32 der Netzwerkeinrichtung 206 (Segment CB2) und vom physikalischen Port 6 der Netzwerkeinrichtung 206 an den physikalischen Port 32 der Netzwerkeinrichtung 106 (Segment CB3) ausschließlich physikalische Einrichtungen der Lane A verwendet werden.

Es ergibt sich eine vollständige physikalische Trennung von der Lane B, die durch die Verkreuzung und Verkabelung der physikalischen Ports 33 der Netzwerkeinrichtung 106 an den physikalischen Port 7 der Netzwerkeinrichtung 206 (Segment CR1), dem physikalischen Port 33 der Netzwerkeinrichtung 206 an den physikalischen Port 7 der Netzwerkeinrichtung 306 (Segment CR2) und dem physikalischen Port 33 der Netzwerkeinrichtung 306 an den physikalischen Port 7 der Netzwerkeinrichtung 106 (Segment CR3) erzielt werden.

Beispielsweise können entsprechende Kabel 34 bereitgestellt werden, die eine entsprechende Zuordnung der Netzwerkzweige CB1-CB3 und CR1-CR3 realisieren. Eine entsprechende Überkreuzung kann auch durch Bereitstellung entsprechender Standard-Stecker mit einer intern veränderten PIN-Belegung erzielt werden. Insgesamt ergibt sich auch durch die überkreuzte Verkabelung wie auch über die überkreuzte interne Verdrahtung in den Netzwerkeinrichtung eine physikalische Trennung von zwei redundant arbeitenden Kommunikationsringen innerhalb eines einzigen ringförmigen physikalischen Netzwerkes.

Auch Kombinationen der vorgeschlagenen Maßnahmen zur überkreuzten Datenübermittlung sind denkbar. Es ist ferner möglich, auch einfache Netzwerkeinrichtungen, die nicht redundante Steuereinrichtungen umfassen, und zusätzliche Switch-Einrichtungen in einer Netzwerkanordnung einzusetzen. Es ist auch möglich mehrere Ringstrukturen aneinander zu koppeln. Es können weitestgehend Standard-Bauelemente eingesetzt werden, die lediglich zur Ausbildung der vorgeschlagenen Topologie angepasst werden.

In den Darstellungen der Netzwerkanordnungen 40 - 46 sind im Wesentlichen Betriebssituationen angedeutet, bei den die Steuereinrichtungen oder CPUs 2, 3 der jeweils ersten Netzwerkeinrichtung 100, 102, 103, 104, 105, 106 oder 110 Daten erzeugt und in das Netzwerk sendet. Im weiteren Betrieb erzeugen und senden auch die übrigen Netzwerkeinrichtungen ihre beispielsweise Steuer- oder Sensordaten, welche dann im Netzwerk konsistent und redundant vorliegen.

Sofern zwischen Lanes Daten mit Hilfe von Switch-Einrichtungen übertragen werden, wird vorzugsweise eine Bandbreitenbegrenzung zur vorbeugenden Behandlung von Fehlersituationen mit Babbling Idiots vorgenommen.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Netzwerkeinrichtung (101-110) für ein Kommunikationsnetzwerk mit einer ersten Steuereinrichtung (2), einer zweiten Steuereinrichtung (3), einem ersten physikalischen Port (6), welcher der ersten Steuereinrichtung (2) zugeordnet ist, und einem zweiten physikalischen Port (7), welcher der zweiten Steuereinrichtung (3) zugeordnet ist, wobei der erste (6) und der zweite physikalischer Port (7) eingerichtet sind, Daten von einem Übertragungsmedium zu Empfangen und Daten zu senden,
wobei die Netzwerkeinrichtung derart eingerichtet ist, dass entweder Sendedaten (SD1) von der ersten Steuereinrichtung (2) von einem internen Sendeanschluss (8) der ersten Steuereinrichtung (2) über den ersten physikalischen Port (6) in das Übertragungsmedium (16) gekoppelt werden und an dem zweiten physikalischen Port (7) eintreffende Empfangsdaten (ED1) an einen internen Empfangsanschluss (10) der ersten Steuereinrichtung (2) geleitet werden,
oder dass an dem ersten physikalischen Port (6) eintreffende Empfangsdaten (ED1') an einen internen Empfangsanschluss (10) der ersten Steuereinrichtung (2) geleitet werden und Sendedaten (SD1') von der ersten Steuereinrichtung (2) von einem internen Sendeanschluss (8) der ersten Steuereinrichtung (2) über den zweiten physikalischen Port (7) in das Übertragungsmedium (16') gekoppelt werden,
ferner mit einer ersten (4) und einer zweiten Switch-Einrichtung (5), wobei eine jeweilige Switch-Einrichtung (4, 5) mehrere Switch-Ports (17-24) aufweist, wobei eine jeweiliger Switch-Port (17-24) einen internen Sendeanschluss (25) und einen internen Empfangsanschluss (26) umfasst, und die erste Switch-Einrichtung (4) mit einem Switch-Port (17) kommunikativ an die erste Steuereinrichtung (2) gekoppelt ist und die zweite Switch-Einrichtung (5) mit einem Switch-Port (18) kommunikativ an die zweite Steuereinrichtung (3) gekoppelt ist.

2. Netzwerkeinrichtung nach Anspruch 1, wobei die Netzwerkeinrichtung ferner derart eingerichtet ist,
dass entweder Sendedaten (SD2) von der zweiten Steuereinrichtung (3) von einem internen Sendeanschluss (9) der zweiten Steuereinrichtung (3) über den zweiten physikalischen Port (7) in das Übertragungsmedium (16') gekoppelt werden und an dem ersten physikalischen Port (6) eintreffende Empfangsdaten (ED2) an einen internen Empfangsanschluss (11) der zweiten Steuereinrichtung (3) geleitet werden,
oder dass an dem zweiten physikalischen Port (7) eintreffende Empfangsdaten (ED2') an einen internen Empfangsanschluss (11) der zweiten Steuereinrichtung (3) geleitet werden und Sendedaten (SD2') von der zweiten Steuereinrichtung (3) von einem internen Sendeanschluss (9) der zweiten Steuereinrichtung (3) über den ersten physikalischen Port (6) in das Übertragungsmedium (16) gekoppelt werden.

3. Netzwerkeinrichtung nach Anspruch 1 oder 2, wobei die Netzwerkeinrichtung ferner derart eingerichtet ist, dass an dem ersten physikalischen Port (6) eintreffenden Empfangsdaten (ED2) nicht an den internen Empfangsanschluss (10) der ersten Steuereinrichtung (2) gelangen.

4. Netzwerkeinrichtung nach einem der Ansprüche 1 - 3, wobei die Netzwerkeinrichtung ferner derart eingerichtet ist, dass an dem zweiten physikalischen Port (7) eintreffende Empfangsdaten (ED1) nicht an den internen Empfangsanschluss (11) der zweiten Steuereinrichtung (3) gelangen.

5. Netzwerkeinrichtung (110) nach einem der Ansprüche 1 - 4, wobei ein jeweiliger physikalischer Port (6, 7) einen externen Sendeanschluss (12, 13) und einen externen Empfangsanschluss (14, 15) umfasst, und der externe Empfangsanschluss (14) des ersten physikalischen Ports (6) an einen internen Empfangsanschluss (25) eines Switch-Ports (22) der zweiten Switch-Einrichtung (5) gekoppelt ist.

6. Netzwerkeinrichtung (110) nach Anspruch 5, wobei ein jeweiliger physikalischer Port (6, 7) einen externen Sendeanschluss (12, 13) und einen externen Empfangsanschluss (14, 15) umfasst, und der externe Empfangsanschluss (15) des zweiten physikalischen Ports (7) an einen internen Empfangsanschluss (25) eines Switch-Ports (23) der ersten Switch-Einrichtung (4) gekoppelt ist.

7. Netzwerkeinrichtung (101) nach Anspruch 5, wobei ein jeweiliger physikalischer Port (6, 7) einen externen Sendeanschluss (12, 13) und einen externen Empfangsanschluss (14, 15) umfasst, und der externe Sendeanschluss (12) des ersten physikalischen Ports (6) an einen internen Sendeanschluss (26) eines Switch-Ports (22) der zweiten Switch-Einrichtung (5) gekoppelt ist.

8. Netzwerkeinrichtung (101) nach Anspruch 7, wobei ein jeweiliger physikalischer Port (6, 7) einen externen Sendeanschluss (12, 13) und einen externen Empfangsanschluss (14, 15) umfasst, und der externe Sendeanschluss (13) des zweiten physikalischen Ports (7) an einen internen Sendeanschluss (26) eines Switch-Ports (23) der ersten Switch-Einrichtung (6) gekoppelt ist.

9. Netzwerkeinrichtung (110) nach einem der Ansprüche 5 - 8, wobei mindestens ein interner Sendeanschluss (26) eines Switch-Ports (22, 23) einer Switch-Einrichtung (4, 5) an einen Empfangsanschluss (25) eines Switch-Ports (21, 22) derselben Switch-Einrichtung (4, 5) gekoppelt ist.

10. Netzwerkeinrichtung (102) nach einem der Ansprüche 5 - 9, wobei mindestens eine Switch-Einrichtung (4, 5) derart eingerichtet ist, dass an einem internen Empfangsanschluss (25) des Switch-Ports (21, 22) empfangene Daten (ED1, ED2) an dem internen Sendeanschluss (26) desselben Switch-Ports (21, 22) versendet werden.

11. Netzwerkeinrichtung (110, 101, 102) nach einem der Ansprüche 5 - 10, wobei die erste Switch-Einrichtung (4) und die zweite Switch-Einrichtung (5) mit Hilfe von jeweils einem Switch-Port (19, 20) kommunikativ miteinander gekoppelt sind.

12. Netzwerkeinrichtung (101-110) nach einem der Ansprüche 5 - 11, wobei mindestens eine Switch-Einrichtung (4, 5) eingerichtet ist, von einer an einem internen Empfangsanschluss (25) des Switch-Ports (17, 18) von der kommunikativ an dem Switch-Port (17, 18) gekoppelten Steuereinrichtung (2, 3) empfangene Daten (D1, D2) an einen internen Sendeanschluss (26) eines Switch-Ports (19, 20, 22, 23) der mindestens einen Switch-Einrichtung (4, 5) zu leiten, welcher mit einem internen Empfangsanschluss (25) eines Switch-Ports (19, 20) der anderen Switch-Einrichtung (4, 5) oder einem internen Empfangsanschluss (10, 11) der anderen Steuereinrichtung (2, 3) verbunden ist.

13. Netzwerkeinrichtung (103) nach Anspruch 12, wobei der interne Empfangsanschluss (25) und der interne Sendeanschluss (26) der mindestens einen Switch-Einrichtung (4, 5) zu demselben Switch-Port (17, 18) der mindestens einen Switch-Einrichtung (4, 5) gehört.

14. Netzwerkeinrichtung (104, 105) nach einem der Ansprüche 1 - 13, wobei die erste und die zweite Steuereinrichtung (2, 3) jeweils einen weiteren internen Sendeanschluss (28, 29) und einen internen Empfangsanschluss (30, 31) aufweist, wobei die Steuereinrichtungen (2, 3) direkt kommunikativ miteinander verbunden sind.

15. Netzwerkeinrichtung (101-110) nach einem der Ansprüche 1 - 14, wobei die erste Steuereinrichtung (2) eingerichtet ist, erste Daten (D1) zu erzeugen und die zweite Steuereinrichtung (3) eingerichtet ist, zweite Daten (D2) zu erzeugen, wobei die ersten Daten (D1) und die zweiten Daten (D2) durch eine vorgegebene Kodierung miteinander verknüpft sind.

16. Netzwerkeinrichtung (101-110) nach einem der Ansprüche 1 - 15, wobei eine Steuereinrichtung (2, 3), eine Switch-Einrichtung (3, 4) und ein physikalischer Port (6, 7) jeweils eine einzelne integrierte Schaltung oder ein Modul bilden.

17. Netzwerkeinrichtung (101-110) nach einem der Ansprüche 1 - 16, wobei der externe Sendeanschluss (12, 13) und/oder der externe Empfangsanschluss (14, 15) zum Ankoppeln von mindestens einem Twisted-Pair-Kabel eingerichtet ist.

18. Netzwerkeinrichtung (101-110) nach einem der Ansprüche 1 - 17, wobei der physikalische Port (6, 7) zum Ankoppeln von mindestens einem Lichtwellenleiter eingerichtet ist.

19. Netzwerkeinrichtung (101-110) nach einem der Ansprüche 1 - 18, wobei die Netzwerkeinrichtung (1, 101-110) zum Einsatz in einer Ethernetprotokollumgebung, insbesondere nach IEEE 802.3 Standard, insbesondere in einem geswitchtem Netzwerk eingerichtet ist.

20. Netzwerkanordnung (40-46) mit mehreren Netzwerkeinrichtungen (101-110, 201-210, 301-310) nach einem der Ansprüche 1 - 19, wobei die Netzwerkeinrichtungen jeweils eine erste Steuereinrichtung (2) und einen der ersten Steuereinrichtung (2) zugeordneten ersten physikalischen Port (6) und eine zweite Steuereinrichtung (3) und einen der zweiten Steuereinrichtung (3) zugeordneten zweiten physikalischen Port (7) umfasst, wobei zum Ausbilden einer Ringstruktur jeder einer ersten Steuereinrichtung (2) in einer ersten Netzwerkeinrichtung zugeordnete physikalische Port (6) mit Hilfe eines Übertragungsmediums (16) kommunikativ an einen einer zweiten Steuereinrichtung (3) in einer zweiten Netzwerkeinrichtung zugeordneten physikalischen Port (7) gekoppelt ist.

21. Netzwerkanordnung (46) nach Anspruch 20, wobei mindestens zwei Netzwerkeinrichtungen (106, 206, 306) der Netzwerkanordnung (46) jeweils einen ersten physikalischen Port (6), welcher der ersten Steuereinrichtung (106) zum Senden von Daten zugeordnet ist, einen weiteren ersten physikalischen Port (32), welcher der ersten Steuereinrichtung (2) zum Empfangen von Daten zugeordnet ist, einen zweiten physikalischen Port (7), welcher der zweiten Steuereinrichtung (3) zum Empfangen von Daten zugeordnet ist, und einen weiteren zweiten physikalischen Port (33), welcher der zweiten Steuereinrichtung (3) zum Senden von Daten zugeordnet ist, aufweisen, wobei der erste physikalische Port (6) einer ersten Netzwerkeinrichtung (106) an einen ersten weiteren physikalischen Port (32) einer zweiten Netzwerkeinrichtung (306) gekoppelt ist und ein zweiter weiterer physikalischer Port (33) der zweiten Netzwerkeinrichtung (306) an einen zweiten physikalischen Port (7) der ersten Netzwerkeinrichtung (106) gekoppelt ist.

22. Verfahren zum Betreiben einer Netzwerkanordnung (40-46) nach Anspruch 20 oder 21, wobei in einer jeweiligen Netzwerkeinrichtung (101-110, 201-210, 301-310) an dem ersten physikalischen Port (6) der Netzwerkeinrichtung von dem Übertragungsmedium (16) empfangene Daten an den zweiten physikalischen Port (7) weitergeleitet werden und von dem zweiten physikalischen Port (7) an das Übertragungsmedium (16) gesendet werden.

23. Verfahren nach Anspruch 22, ferner umfassend:
Erzeugen von ersten Daten (D1) durch die erste Steuereinrichtung (2) und von zweiten Daten (D2) durch die zweite Steuerreinrichtung (3), wobei die ersten Daten (D1) und die zweiten Daten (D2) durch eine vorgegebene Kodierung miteinander verknüpft sind;
Übermitteln der ersten Daten (D1) von der ersten Steuereinrichtung (2) an die zweite Steuereinrichtung (3) und Übermitteln der zweiten Daten (D2) von der zweiten Steuereinrichtung (3) an die erste Steuereinrichtung (2);
Senden der ersten Daten (D1) und der zweiten Daten (D2) über einen ersten Kommunikationspfad von dem physikalischen Port (6) der ersten Steuereinrichtung zu dem physikalischen Port der zweiten Steuereinrichtung (7);
Senden der ersten Daten (D1) und der zweiten Daten (D2) über einen zweiten Kommunikationspfad von dem physikalischen Port (7) der zweiten Steuereinrichtung (3) zu dem physikalischen Port (6) der ersten Steuereinrichtung (3);
wobei die Daten des ersten und des zweiten Kommunikationspfads dieselben Netzwerkeinrichtungen in entgegen gesetzter Richtung durchlaufen.

24. Verfahren nach Anspruch 22 oder 23, ferner umfassend: Vergleichen der ersten Daten (D1) mit den zweiten Daten (D2) in der ersten und/oder zweiten Steuereinrichtung (2, 3) zum Erzeugen eines Vergleichsergebnisses und Passivieren der Netzwerkeinrichtung (101-110, 201-210, 301-310) in Abhängigkeit von dem Vergleichsergebnis.

25. Computerprogrammprodukt, welches die Durchführung eines Verfahrens nach einem der Ansprüche 22 - 24 auf einer oder mehrerer programmgesteuerter Einrichtungen (101-110, 201-210, 301-310) veranlasst.

26. Datenträger mit einem gespeicherten Computerprogramm mit Befehlen, welche die Durchführung eines Verfahrens nach einem der Ansprüche 22 - 24 auf einer oder mehrerer programmgesteuerter Einrichtungen (101-110, 201-210, 301-310) veranlasst.

## Claims

1. A network mechanism (101-110) for a communication network with a first control mechanism (2), a second control mechanism (3), a first physical port (6), which is assigned to the first control mechanism (2) and a second physical port (7), which is assigned to the second control mechanism (3), wherein the first (6) and the second physical port (7) are set up to receive data from a transmission medium and to send data,
wherein the network mechanism is set up such that either transmitted data (SD1) from the first control mechanism (2) are coupled by an internal transmit connector (8) of the first control mechanism (2) via the first physical port (6) into the transmission medium (16) and received data (ED1) arriving at the second physical port (7) are routed to an internal receive connector (10) of the first control mechanism (2),
or that received data (ED1') arriving at the first physical port (6) are routed to an internal receive connector (10) of the first control mechanism (2) and transmitted data (SD1') from the first control mechanism (2) are coupled by an internal transmit connector (8) of the first control mechanism (2) via the second physical port (7) into the transmission medium (16'),
further with a first (4) and a second switch mechanism (5), wherein a respective switch mechanism (4, 5) comprises a plurality of switch ports (17-24), wherein a respective switch port (17-24) comprises an internal transmit connector (25) and an internal receive connector (26) and the first switch mechanism (4) with a switch port (17) is communicatively coupled to the first control mechanism (2) and the second switch mechanism (5) with a switch port (18) is communicatively coupled to the second control mechanism (3).

2. Network mechanism according to claim 1, wherein the network mechanism is further set up such
that either transmitted data (SD2) from the second control mechanism (3) are coupled by an internal transmit connector (9) of the second control mechanism (3) via the second physical port (7) in the transmission medium (16') and received data (ED2) arriving at the first physical port (6) are routed to an internal receive connector (11) of the second control mechanism (3),
or that received data (ED2') arriving at the second physical port (7) are routed to an internal receive connector (11) of the second control mechanism (3) and transmitted data (SD2') from the second control mechanism (3) are coupled by an internal transmit connector (9) of the second control mechanism (3) via the first physical port (6) into the transmission medium (16).

3. Network mechanism according to claim 1 or 2, wherein the network mechanism is further set up such that received data (ED2) arriving at the first physical port (6) do not go to the internal receive connector (10) of the first control mechanism (2).

4. Network mechanism according to any one of claims 1 - 3, wherein the network mechanism is further set up such that received data (ED1) arriving at the second physical port (7) do not go to the internal receive connector (11) of the second control mechanism (3).

5. Network mechanism (110) according to any one of claims 1 - 4, wherein a respective physical port (6, 7) comprises an external transmit connector (12, 13) and an external receive connector (14, 15), and the external receive connector (14) of the first physical port (6) is coupled to an internal receive connector (25) of a switch port (22) of the second switch mechanism (5).

6. Network mechanism (110) according to claim 5, wherein a respective physical port (6, 7) comprises an external transmit connector (12, 13) and an external receive connector (14, 15), and the external receive connector (15) of the second physical port (7) is coupled to an internal receive connector (25) of a switch port (23) of the first switch mechanism (4).

7. Network mechanism (101) according to claim 5, wherein a respective physical port (6, 7) comprises an external transmit connector (12, 13) and an external receive connector (14, 15), and the external transmit connector (12) of the first physical port (6) is coupled to an internal transmit connector (26) of a switch port (22) of the second switch mechanism (5).

8. Network mechanism (101) according to claim 7, wherein a respective physical port (6, 7) comprises an external transmit connector (12, 13) and an external receive connector (14, 15), and the external transmit connector (13) of the second physical port (7) is coupled to an internal transmit connector (26) of a switch port (23) of the first switch mechanism (6).

9. Network mechanism (110) according to any one of claims 5 - 8, wherein at least one internal transmit connector (26) of a switch port (22, 23) of a switch mechanism (4, 5) is coupled to a receive connector (25) of a switch port (21, 22) of the same switch mechanism (4, 5).

10. Network mechanism (102) according to one of claims 5 - 9, wherein at least one switch mechanism (4, 5) is set up such that data (ED1, ED2) received at an internal receive connector (25) of the switch port (21, 22) are sent to the internal transmit connector (26) of the same switch port (21, 22).

11. Network mechanism (110, 101, 102) according to any one of claims 5 - 10, wherein the first switch mechanism (4) and the second switch mechanism (5) are in each case communicatively coupled to each other with the aid of a switch port (19, 20).

12. Network mechanism (101-110) according to any one of claims 5 - 11, wherein at least one switch mechanism (4, 5) is set up to route data (D1, D2) received by a control mechanism (2, 3) communicatively coupled to the switch port (17, 18) at an internal receive connector (25) of the switch port (17, 18) to an internal transmit connector (26) of a switch port (19, 20, 22, 23) of the at least one switch mechanism (4, 5), which switch port (19, 20, 22, 23) is connected to an internal receive connector (25) of a switch port (19, 20) of the other switch mechanism (4, 5) or to an internal receive connector (10, 11) of the other control mechanism (2, 3).

13. Network mechanism (103) according to claim 12, wherein the internal receive connector (25) and the internal transmit connector (26) of the at least one switch mechanism (4, 5) belongs to the same switch port (17, 18) of the at least one switch mechanism (4, 5).

14. Network mechanism (104, 105) according to any one of claims 1 - 13, wherein the first and the second control mechanism (2, 3) each comprise a further internal transmit connector (28, 29) and an internal receive connector (30, 31), wherein the control mechanisms (2, 3) are directly communicatively connected to each other.

15. Network mechanism (101-110) according to any one of claims 1 - 14, wherein the first control mechanism (2) is set up to generate first data (D1) and the second control mechanism (3) is set up to generate second data (D2) wherein the first data (D1) and the second data (D2) are linked to each other by a prespecified coding.

16. Network mechanism (101-110) according to any one of claims 1 - 15, wherein a control mechanism (2, 3), a switch mechanism (3, 4) and a physical port (6, 7) in each case form an individual integrated circuit or a module.

17. Network mechanism (101-110) according to any one of claims 1 - 16, wherein the external transmit connector (12, 13) and/or the external receive connector (14, 15) is set up to attach at least one twisted-pair cable.

18. Network mechanism (101-110) according to any one of claims 1 - 17, wherein the physical port (6, 7) is set up to attach at least one optical waveguide.

19. Network mechanism (101-110) according to any one of claims 1 - 18, wherein the network mechanism (1, 101-110) is set up for use in an Ethernet protocol environment, in particular according to the IEEE 802.3 Standard, in particular in a switched network.

20. Network arrangement (40-46) with a plurality of network mechanisms (101-110, 201-210, 301-310) according to any one of claims 1 - 19, wherein the network mechanisms in each case comprise a first control mechanism (2) and a first physical port (6) assigned to the first control mechanism (2) and a second control mechanism (3) and second physical port (7) assigned to the second control mechanism (3), wherein to form a ring structure each first physical port (6) assigned to a first control mechanism (2) in a first network mechanism is communicatively coupled with the aid of a transmission medium (16) to a physical port (7) assigned to a second control mechanism (3) in a second network mechanism.

21. Network arrangement (46) according to claim 20, wherein at least two network mechanisms (106, 206, 306) of the network arrangement (46) in each case comprise a first physical port (6), which is assigned to the first control mechanism (106) for sending data, a further first physical port (32), which is assigned to the first control mechanism (2) for receiving data, a second physical port (7), which is assigned to the second control mechanism (3) for receiving data, and a further second physical port (33), which is assigned to the second control mechanism (3) for sending data, wherein the first physical port (6) of a first network mechanism (106) is coupled to a first further physical port (32) of a second network mechanism (306) and a second further physical port (33) of the second network mechanism (306) is coupled to a second physical port (7) of the first network mechanism (106).

22. Method for operating a network arrangement (40-46) as claimed in claim 20 or 21, wherein in a respective network mechanism (101-110, 201-210, 301-310) at the first physical port (6) of the network mechanism, data received from the transmission medium (16) are rerouted to the second physical port (7) and sent from the second physical port (7) to the transmission medium (16).

23. Method according to claim 22 further comprising:
the generation of first data (D1) by the first control mechanism (2) and of second data (D2) by the second control mechanism (3), wherein the first data (D1) and the second data (D2) are linked to each other by a prespecified coding;
the transmission of the first data (D1) from the first control mechanism (2) to the second control mechanism (3) and the transmission of the second data (D2) from the second control mechanism (3) to the first control mechanism (2);
sending the first data (D1) and the second data (D2) via a first communication path from the physical port (6) of the first control mechanism to the physical port of the second control mechanism (7);
sending the first data (D1) and the second data (D2) via a second communication path from the physical port (7) of the second control mechanism (3) to the physical port (6) of the first control mechanism (3);
wherein the data of the first and of the second communication paths travel through the same network mechanisms in opposite directions.

24. Method according to claim 22 or 23, further comprising: the comparison of the first data (D1) with the second data (D2) in the first and/or second control mechanism (2, 3) for the generation of a comparison result; and passivation of the network mechanism (101-110, 201-210, 301-310) as a function of the comparison result.

25. Computer program product, which initiates the performance of a method as claimed in any one of claims 22 - 24 on one or more program-controlled mechanisms (101-110, 201-210, 301-310).

26. Data carrier with a stored computer program with commands, which initiates the performance of a method as claimed in any one of claims 22 - 24 on one or more program-controlled mechanisms (101-110, 201-210, 301-310).

## Revendications

1. Dispositif de réseau (101 - 110) pour un réseau de communication, comprenant un premier dispositif de commande (2), un deuxième dispositif de commande (3), un premier port physique (6) lequel est attribué au premier dispositif de commande (2), et un deuxième port physique (7) lequel est attribué au deuxième dispositif de commande (3), le premier port physique (6) et le deuxième port physique (7) étant agencés pour recevoir des données d'un premier support de transmission et pour émettre des données,
le dispositif de réseau étant agencé de manière à ce que soit des données d'émission (SD1) du premier dispositif de commande (2) soient couplées dans le support de transmission (16) par un terminal d'émission interne (8) du premier dispositif de commande (2) par l'intermédiaire du premier port physique (6) et que des données de réception (ED1) arrivant sur le deuxième port physique (7) soient transmises à un terminal de réception interne (10) du premier dispositif de commande (2),
soit des données de réception (ED1') arrivant sur le premier port physique (6) soient transmises à un terminal de réception interne (10) du premier dispositif de commande (2) et que des données d'émission (SD1') du premier dispositif de commande (2) soient couplées dans le support de transmission (16') par un terminal d'émission interne (8) du premier dispositif de commande (2) par l'intermédiaire du deuxième port physique (7), comprenant en outre un premier dispositif de commutation (4) et un deuxième dispositif de commutation (5), un dispositif de commutation respectif (4, 5) présentant plusieurs ports de commutation (17 - 24), un port de commutation respectif (17 - 24) comprenant un terminal d'émission interne (25) et un terminal de réception interne (26), et le premier dispositif de commutation (4) étant couplé de manière communicative au premier dispositif de commande (2) à l'aide d'un port de commutation (17) et le deuxième dispositif de commutation (5) étant couplé de manière communicative au deuxième dispositif de commande (3) à l'aide d'un port de commutation (18).

2. Dispositif de réseau selon la revendication 1, le dispositif de réseau étant en outre agencé de manière à ce
que soit des données d'émission (SD2) du deuxième dispositif de commande (3) soient couplées dans le support de transmission (16') par un terminal d'émission interne (9) du deuxième dispositif de commande (3) par l'intermédiaire du deuxième port physique (7) et que des données de réception (ED2) arrivant sur le premier port physique (6) soient transmises à un terminal de réception interne (11) du deuxième dispositif de commande (3),
soit des données de réception (ED2') arrivant sur le deuxième port physique (7) soient transmises à un terminal de réception interne (11) du deuxième dispositif de commande (3) et que des données d'émission (SD2') du deuxième dispositif de commande (3) soient couplées dans le support de transmission (16) par un terminal d'émission interne (9) du deuxième dispositif de commande (3) par l'intermédiaire du premier port physique (6).

3. Dispositif de réseau selon la revendication 1 ou 2, le dispositif de réseau étant en outre agencé de manière à ce que des données de réception (ED2) arrivant sur le premier port physique (6) n'accèdent pas au terminal de réception interne (10) du premier dispositif de commande (2).

4. Dispositif de réseau selon l'une quelconque des revendications 1 à 3, le dispositif de réseau étant en outre agencé de manière à ce que des données de réception (ED1) arrivant sur le deuxième port physique (7) n'accèdent pas au terminal de réception interne (11) du deuxième dispositif de commande (3).

5. Dispositif de réseau (110) selon l'une quelconque des revendications 1 à 4, un port physique respectif (6, 7) comprenant un terminal d'émission externe (12, 13) et un terminal de réception externe (14, 15), et le terminal de réception externe (14) du premier port physique (6) étant couplé à un terminal de réception interne (25) d'un port de commutation (22) du deuxième dispositif de commutation (5).

6. Dispositif de réseau (110) selon la revendication 5, un port physique respectif (6, 7) comprenant un terminal d'émission externe (12, 13) et un terminal de réception externe (14, 15), et le terminal de réception externe (15) du deuxième port physique (7) étant couplé à un terminal de réception interne (25) d'un port de commutation (23) du premier dispositif de commutation (4).

7. Dispositif de réseau (101) selon la revendication 5, un port physique respectif (6, 7) comprenant un terminal d'émission externe (12, 13) et un terminal de réception externe (14, 15), et le terminal d'émission externe (12) du premier port physique (6) étant couplé à un terminal d'émission interne (26) d'un port de commutation (22) du deuxième dispositif de commutation (5).

8. Dispositif de réseau (101) selon la revendication 7, un port physique respectif (6, 7) comprenant un terminal d'émission externe (12, 13) et un terminal de réception externe (14, 15), et le terminal d'émission externe (13) du deuxième port physique (7) étant couplé à un terminal d'émission interne (26) d'un port de commutation (23) du premier dispositif de commutation (6).

9. Dispositif de réseau (110) selon l'une quelconque des revendications 5 à 8, au moins un terminal d'émission interne (26) d'un port de commutation (22, 23) d'un dispositif de commutation (4, 5) étant couplé à un terminal de réception (25) d'un port de commutation (21, 22) du même dispositif de commutation (4, 5).

10. Dispositif de réseau (102) selon l'une quelconque des revendications 5 à 9, au moins un dispositif de commutation (4, 5) étant agencé de manière à ce que des données (ED1, ED2) reçues sur un terminal de réception interne (25) du port de commutation (21, 22) soient émises au terminal d'émission interne (26) du même port de commutation (21, 22).

11. Dispositif de réseau (110, 101, 102) selon l'une quelconque des revendications 5 à 10, le premier dispositif de commutation (4) et le deuxième dispositif de commutation (5) étant couplés entre eux de manière communicative à l'aide de respectivement un port de commutation (19, 20).

12. Dispositif de réseau (101 - 110) selon l'une quelconque des revendications 5 à 11, au moins un dispositif de commutation (4, 5) étant agencé pour transmettre à un terminal d'émission interne (26) d'un port de commutation (19, 20, 22, 23) de l'au moins un dispositif de commutation (4, 5) des données (D1, D2) reçues par un dispositif de commande (2, 3) couplé de manière communicative au port de commutation (17, 18) à un terminal de réception interne (25) du port de commutation (17, 18), lequel est relié à un terminal de réception interne (25) d'un port de commutation (19, 20) de l'autre dispositif de commutation (4, 5) ou à un terminal de réception interne (10, 11) de l'autre dispositif de commande (2, 3).

13. Dispositif de réseau (103) selon la revendication 12, le terminal de réception interne (25) et le terminal d'émission interne (26) de l'au moins un dispositif de commutation (4, 5) appartenant au même port de commutation (17, 18) de l'au moins un dispositif de commutation (4, 5).

14. Dispositif de réseau (104, 105) selon l'une quelconque des revendications 1 à 13, le premier et le deuxième dispositifs de commande (2, 3) présentant respectivement un terminal d'émission interne supplémentaire (28, 29) et un terminal de réception interne (30, 31), les dispositifs de commande (2, 3) étant reliés entre eux directement de manière communicative.

15. Dispositif de réseau (101 - 110) selon l'une quelconque des revendications 1 à 14, le premier dispositif de commande (2) étant agencé pour générer des premières données (D1) et le deuxième dispositif de commande (3) étant agencé pour générer des deuxièmes données (D2), les premières données (D1) et les deuxièmes données (D2) étant reliées entre elles au moyen d'un codage prédéfini.

16. Dispositif de réseau (101 - 110) selon l'une quelconque des revendications 1 à 15, un dispositif de commande (2, 3), un dispositif de commutation (3, 4) et un port physique (6, 7) formant respectivement un circuit individuel intégré ou un module.

17. Dispositif de réseau (101 - 110) selon l'une quelconque des revendications 1 à 16, le terminal d'émission externe (12, 13) et/ou le terminal de réception externe (14, 15) étant agencés pour coupler au moins un câble à paires torsadées.

18. Dispositif de réseau (101 - 110) selon l'une quelconque des revendications 1 à 17, le port physique (6, 7) étant agencé pour coupler au moins une fibre optique.

19. Dispositif de réseau (101 - 110) selon l'une quelconque des revendications 1 à 18, le dispositif de réseau (1, 101 - 110) étant agencé pour être utilisé dans un environnement de protocole Ethernet, notamment suivant la norme IEEE 802.3, notamment dans un réseau commuté.

20. Agencement de réseau (40 - 46) comprenant plusieurs dispositifs de réseau (101 - 110, 201 - 210, 301 - 310) selon l'une quelconque des revendications 1 à 19, les dispositifs de réseau comprenant respectivement un premier dispositif de commande (2) et un premier port physique (6) attribué au premier dispositif de commande (2) et un deuxième dispositif de commande (3) et un deuxième port physique (7) attribué au deuxième dispositif de commande (3), chaque port physique (6) attribué à un premier dispositif de commande (2) dans un premier dispositif de réseau étant couplé, à l'aide d'un support de transmission (16), de manière communicative à un port physique (7) attribué à un deuxième dispositif de commande (3) dans un deuxième dispositif de réseau pour former une structure annulaire.

21. Agencement de réseau (46) selon la revendication 20, au moins deux dispositifs de réseau (106, 206, 306) de l'agencement de réseau (46) présentant respectivement un premier port physique (6), lequel est attribué au premier dispositif de commande (106) pour l'émission de données, un premier port physique supplémentaire (32), lequel est attribué au premier dispositif de commande (2) pour recevoir des données, un deuxième port physique (7), lequel est attribué au deuxième dispositif de commande (3) pour recevoir des données, et un deuxième port physique supplémentaire (33), lequel est attribué au deuxième dispositif de commande (3) pour émettre des données, le premier port physique (6) d'un premier dispositif de réseau (106) étant couplé à un premier port physique supplémentaire (32) d'un deuxième dispositif de réseau (306) et un deuxième port physique supplémentaire (33) du deuxième dispositif de réseau (306) étant couplé à un deuxième port physique (7) du premier dispositif de réseau (106).

22. Procédé de fonctionnement d'un agencement de réseau (40 - 46) selon la revendication 20 ou 21, des données reçues par le support de transmission (16) dans un dispositif de réseau respectif (101 - 110, 201 - 210, 301 - 310) sur le premier port physique (6) du dispositif de réseau étant transmises au deuxième port physique (7) et étant émises au support de transmission (16) par le deuxième port physique (7).

23. Procédé selon la revendication 22, comprenant en outre :
génération de premières données (D1) par le premier dispositif de commande (2) et de deuxièmes données (D2) par le deuxième dispositif de commande (3), les premières données (D1) et les deuxièmes données (D2) étant reliées entre elles au moyen d'un codage prédéfini ;
transmission des premières données (D1) du premier dispositif de commande (2) au deuxième dispositif de commande (3) et transmission des deuxièmes données (D2) du deuxième dispositif de commande (3) au premier dispositif de commande (2) ;
émission des premières données (D1) et des deuxièmes données (D2) par l'intermédiaire d'une première voie de communication du port physique (6) du premier dispositif de commande vers le port physique du deuxième dispositif de commande (7);
émission des premières données (D1) et des deuxièmes données (D2) par l'intermédiaire d'une deuxième voie de communication du port physique (7) du deuxième dispositif de commande (3) vers le port physique (6) du premier dispositif de commande (3);
les données de la première et de la deuxième voies de communication traversant les mêmes dispositifs de réseau en direction inverse.

24. Procédé selon la revendication 22 ou 23, comprenant en outre :
comparaison des premières données (D1) avec les deuxièmes données (D2) dans le premier et/ou le deuxième dispositifs de commande (2, 3) afin de générer un résultat comparatif ; et passivation du dispositif de réseau (101 - 110, 201 - 210, 301 - 310) en fonction du résultat comparatif.

25. Produit de programme d'ordinateur, lequel entraîne la réalisation d'un procédé selon l'une quelconque des revendications 22 à 24 sur un ou plusieurs dispositifs commandés par programme (101 - 110, 201 - 210, 301 -310).

26. Support de données comprenant un programme d'ordinateur mémorisé avec des instructions, lesquelles entraînent la réalisation d'un procédé selon l'une quelconque des revendications 22 à 24 sur un ou plusieurs dispositifs commandés par programme (101 - 110, 201 - 210, 301 -310).
